(19) Europäisches Patentamt
European Patent Office
Office européen des brevets

(11) EP 2 213 166 B1

(12) **EUROPÄISCHE PATENTSCHRIFT**

(45) Veröffentlichungstag und Bekanntmachung des Hinweises auf die Patenterteilung:
**21.03.2012 Patentblatt 2012/12**

(21) Anmeldenummer: **10151863.7**

(22) Anmeldetag: **28.01.2010**

(51) Int Cl.:
***A01N 41/10** (2006.01)*
***A01N 1/00** (2006.01)*
***A01P 1/00** (2006.01)*
***C09D 5/14** (2006.01)*
***A01N 43/80** (2006.01)*
***A01N 3/00** (2006.01)*
***C09D 5/02** (2006.01)*

(54) **Biozidzusammensetzungen enthaltend 2-Methylisothiazolin-3-on und ein Haloalkylsulfon**

Biocidal compounds containing 2-methylisothiazolin-3-one and a haloalkylsulfone

Compositions biocides contenant du 2-méthylisothiazolin-3-one et une haloalkylsulfone

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **29.01.2009 EP 09151676**

(43) Veröffentlichungstag der Anmeldung:
**04.08.2010 Patentblatt 2010/31**

(73) Patentinhaber: **THOR GmbH**
**67346 Speyer (DE)**

(72) Erfinder:
- **Baum, Rüdiger**
  **68753 Waghäusel (DE)**
- **Schmidt, Hans-Jürgen**
  **67346 Speyer (DE)**
- **Wunder, Thomas, Dr.**
  **67435 Neustadt (DE)**
- **Savides, Christos, Dr.**
  **Fairfield, Connecticut 06825 (US)**

(56) Entgegenhaltungen:
**EP-A1- 0 676 140** **EP-A1- 0 900 525**
**EP-A1- 1 961 792** **WO-A1-02/17716**
**US-A- 3 615 745** **US-A- 4 906 651**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft eine Biozidzusammensetzung, die als mikrobizide Wirkkomponenten 2-Methylisothiazolin-3-on und ein oder mehrere Haloalkylsulfon(e) enthält. Die Erfindung betrifft ferner die Verwendung spezieller Additive zur Verminderung von Emissionen aus Zusammensetzungen, die 2-Methylisothiazolin-3-on enthalten.

Biozide Mittel werden in vielen Bereichen eingesetzt, beispielsweise zur Bekämpfung von Bakterien, Pilzen und Algen. Es ist seit langem bekannt, in solchen bioziden Mitteln Isothiazolin-3-one (die auch als 3-Isothiazolone bezeichnet werden) einzusetzen, da sich unter dieser Verbindungsklasse sehr wirksame biozide Verbindungen befinden.

Eine der vorstehend genannten wirksamen bioziden Verbindungen ist das 5-Chlor-2-methylisothiazolin-3-on. Diese Verbindung weist zwar eine gute biozide Wirkung auf, hat jedoch bei ihrer praktischen Handhabung verschiedene Nachteile. So löst die Verbindung bei Personen, die damit umgehen, häufig Allergien aus. Auch bestehen in manchen Ländern gesetzliche Beschränkungen für den AOX-Wert, d.h. es darf im Wasser eine bestimmte Konzentration von an Aktivkohle absorbierenden organischen Chlor-, Brom-und Iodverbindungen nicht überschritten werden. Dies verhindert dann weitgehend den Einsatz von 5-Chlor-2-methylisothiazolin-3-on im gewünschten Umfang, bzw. erlaubt es 5-Chlor-2-methylisothiazolin-3-on lediglich in geringen Mengen einzusetzen. Ferner ist die Stabilität dieser Verbindung unter bestimmten Bedingungen, zum Beispiel bei hohen pH-Werten oder in Anwesenheit von Nukleophilen oder Reduktionsmitteln, nicht ausreichend.

Ein weiteres bekanntes Isothiazolin-3-on mit biozider Wirkung ist das 2-Methyl-isothiazolin-3-on. Diese Verbindung vermeidet zwar verschiedene Nachteile des vorstehend genannten 5-Chlor-2-methylisothiazolin-3-ons, beispielsweise das oben erwähnte Allergierisiko, hat jedoch eine verglichen mit dem 5-Chlor-2-methylisothiazolin-3-on eine wesentlich geringere biozide Wirkung. Ein einfacher Austausch von 5-Chlor-2-methylisothiazolin-3-on durch 2-Methylisothiaxolin-3-on ist daher ohne weiteres nicht möglich, ohne einen größeren Verlust an biozider Wirkung zu erhalten.

Es ist bekannt, eine Kombination aus verschiedenen Isothiazolin-3-onen zu benutzen. So offenbart beispielsweise die EP-A 0 676 140 eine synergistische Biozidzusammensetzung, die 2-Methylisothiazolin-3-on und 2-n-Octylisothiazolin-3-on enthält.

Aus der EP-B 1 005 271 sind weitere Biozidzusammensetzungen bekannt, die eine synergistische Wirkkombination aus 2-Methylisothiazolin-3-on und 1,2-Benzisothiazolin-3-on enthalten. Diese Biozidzusammensetzungen sind frei von 5-Chlor-2-methylisothiazolin-3-on.

Ebenfalls offenbart die EP-B 1 030 558 eine synergistische Biozidzusammensetzung, die 2-Methylisothiazolin-3-on und 3-Iod-2-propinyl-N-butylcarbamat enthält. Diese synergistische Zusammensetzung eignet sich bereits in geringen Konzentrationen zur Bekämpfung von Mikroorganismen.

US 4 906 651 A offenbart biozide Zusammensetzungen, die als biozide Wirkstoffe 5-Chlor-2-methylisothiazolin-3-on und 2-Methylisothiazolin-3-on, sowie ein oder mehrere weitere biozide Verbindungen enthalten.

Aus der WO 02/17716 A1 sind verschiedene synergistische Mischungen bekannt, die 2-Methylisothiazolin-3-on und mindestens einen weiteren bioziden Wirkstoff enthalten. Auch diese synergistischen Zusammensetzungen eignen sich bereits in geringen Konzentrationen zur Bekämpfung von Mikroorganismen.

Ausgehend von dem vorstehend diskutierten Stand der Technik besteht Bedarf an weiteren Biozidzusammensetzungen, deren mikrobizide Wirkkomponenten synergistisch zusammenwirken und deshalb beim gleichzeitigen Einsatz in geringeren Konzentrationen verwendet werden können, verglichen mit den nötigen Konzentrationen im Falle der Einzelkomponenten.

Bei der Beschichtung von Flächen mit Beschichtungsmitteln wie Dispersionsfarben können unangenehme Gerüche auftreten. Dieses Phänomen tritt zum Beispiel bei der Verwendung von Farben oder Putzen zum Beschichten von Flächen im Innen- und Außenbereich auf. Dabei werden unangenehme, störende Gerüche vor allem im Innenbereich aufgrund unzureichender Ventilation als besonders unangenehm empfunden.

Ein bislang weitgehend unerforschtes und bisher ungelöstes Problem stellt der so genannte "Ghost Odor" dar. Dabei tritt ein störender Geruch in Räumen mit bereits getrockneten, verfilmten, teilweise bereits älteren Beschichtungen auf. Beispiele dieser Beschichtungen sind Farb- oder Putzfilme auf Flächen im Innenbereich. Der Ghost Odor kann dabei Tage, Wochen oder Monate nach dem Aufbringen der Beschichtung auftreten und wird als katzenurinartig, schweißig, zwiebelartig, gummiartig, fruchtig wahrgenommen und beschrieben. Es ist weiter bekannt, dass dieser Ghost Odor besonders intensiv wahrnehmbar ist bei warmer Witterung und höheren Temperaturen, bei höherer Luftfeuchte, vielfach auch nach dem Lüften eines Raumes, bei intensivem Sonnenlicht, und insbesondere bei der Einwirkung von Ozon.

Mit Hilfe des in den Beispielen beschriebenen Verfahrens ist es möglich, den Ghost Odor standardisiert nachzuweisen. Personen die dem Ghost Odor ausgesetzt waren, sind bei normalem Geruchsempfinden in der Lage, diesen Geruch zweifelsfrei wieder zu erkennen.

Untersuchungen zeigen, dass schwefelhaltige Verbindungen maßgeblich an der Geruchsbildung beteiligt sind. Schwefelverbindungen in Beschichtungsmitteln können aus zahlreichen unterschiedlichen Quellen stammen. Diese können in den Produkten selbst oder in den zur ihrer Herstellung verwendeten Rohstoffen rezepturbedingt oder als herstellbedingte, lagerungs- oder transportbedingte Verunreinigungen enthalten sein. Dabei kann es sich um Schwefelverbindungen sowohl synthetischen Ursprungs als auch um Schwefelverbindungen biogenen Ursprungs handeln. Eine Verbindung, welche das Auftreten von Ghost Odor in Beschichtungen bzw. Beschichtungsmitteln hervorrufen kann, ist das 2-Methyl-4-isothiazolin-3-on.

Das Vermeiden von Schwefelverbindungen in Beschichtungsstoffen zur Verhinderung des Ghost Odor ist oft nur schwer möglich, da es sich bereits um äußerst geringe Mengen handeln kann, die den Geruch verursachen.

Ausgehend von dem Stand der Technik lag der Erfindung die Aufgabe zugrunde, eine weitere Biozidzusammensetzung zur Verfügung zu stellen, deren mikrobizide Wirkkomponenten synergistisch zusammenwirken und deshalb beim gleichzeitigen Einsatz in geringeren Konzentrationen verwendet werden können, verglichen mit den nötigen Konzentrationen im Falle der Einzelkomponenten.

Eine weitere Aufgabe der Erfindung ist es, Additive bzw. Verbindungen zur weitgehenden Verhinderung von Ghost Odor in 2-Methyl-4-isothiazolin-3-on-haltigen Zusammensetzungen bereitzustellen. Insbesondere sollen diese Verbindungen als Inhibitoren zur Verhinderung von Ghost Odor bereitgestellt werden, die das Auftreten von Ghost Odor in Filmen, Beschichtungen und Gebinden, die mit 2-Methyl-4-isothiazolin-3-on konserviert sind, weitgehend verhindern.

Diese Aufgabe löst die Erfindung durch eine Biozidzusammensetzung, enthaltend als mikrobizide Wirkkomponenten 2-Methylisothiazolin-3-on und ein oder mehrere Haloalkylsulfon(e) gemäß der allgemeinen Strukturformel I,

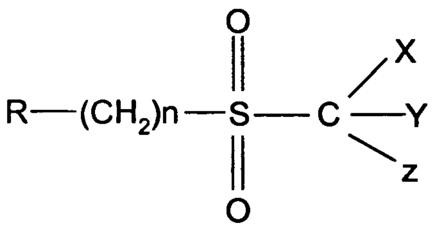

(I)

wobei

R ausgewählt ist aus der Gruppe H, Alkyl, Cycloalkyl, Aralkyl, Aryl, Alkoxyaryl und Heteroaryl, wobei die Gruppen Alkyl, Cycloalkyl, Aralkyl, Aryl, Alkoxyaryl und Heteroaryl gegebenenfalls mit einem oder mehreren Substituenten substituiert sind.

Die Substituenten sind dabei unabhängig voneinander ausgewählt aus der Gruppe Fluor, Chlor, Brom, Iod, Hydroxy, gegebenenfalls substituiertem Alkyl, gegebenenfalls substituiertem Aryl, gegebenenfalls substituiertem Heteroaryl, gegebenenfalls substituiertem Aralkyl, Alkoxy, Amino, Nitro, Carboxy, Carboalkoxy, Cyano, Alkylamino, Hydroxyalkyl, Mercaptyl, Alkylmercaptyl, Trihaloalkyl, Carboxyalkyl, Carbamoyl, $-(C_1-C_7)$Alkyl, $-PF_3$, $-O-(C_1-C_7)$-Alkyl, $-NH-(C_1-C_4)$-Alkyl, $-N((C_1-C_4)$-Alkyl$)_2$, -NH-CHO, $-NH-CO-(C_1-C_4)$-Alkyl, $-CO-NH_2$, $-CO-NH-(C_1-C_4)$Alkyl, $-CO-N((C_1-C_4)$Alkyl$)_2$ und -CO-OH.

X, Y und Z sind unabhängig voneinander ausgewählt aus der Gruppe Wasserstoff, Fluor, Chlor, Brom und Iod, wobei mindestens eine von X, Y und Z ein Halogenatom ist. Gemäß einer weiteren bevorzugten Ausführungsform der Erfindung sind X, Y und Z unabhängig voneinander ausgewählt aus der Gruppe Wasserstoff, Fluor, Chlor, Brom und Iod, wobei mindestens zwei ein Halogenatom sind. Gemäß einer besonders bevorzugten Ausführungsform der Erfindung sind X, Y und Z unabhängig voneinander ausgewählt aus der Gruppe Wasserstoff, Fluor, Chlor, Brom und Iod, und haben ein Gesamtatomgewicht von größer 110.

n ist eine ganze Zahl von 0 bis 4. Gemäß einer bevorzugten Ausführungsform der Erfindung ist n eine Ganze Zahl von 0 bis 2, besonders bevorzugt ist n gleich 0.

"Alkyl" bedeutet eine gesättigte aliphatische Kohlenwasserstoffgruppe, die geradkettig oder verzweigt sein kann und von 1 bis 20 Kohlenstoffatome in der Kette haben kann. Bevorzugte Alkylgruppen können geradkettig oder verzweigt sein und von 1 bis zu 10 Kohlenstoffatome in der Kette aufweisen. Verzweigt bedeutet, dass eine NiederAlkylgruppe, wie Methyl, Ethyl oder Propyl, an eine lineare Alkylkette angebracht ist. Bei Alkyl handelt es sich beispielsweise um Methyl, Ethyl, 1-Propyl, 2-Propyl, 1-Butyl, 2-Butyl, 2-Methyl-1-propyl (Isobutyl), 2-Methyl-2-propyl (tert.-Butyl), 1-Pentyl, 2-Pentyl, 3-Pentyl, 2-Methyl-1-butyl, 3-Methyl-1-butyl, 2-Methyl-2-butyl, 3-Methyl-2-butyl, 2,2-Dimethyl-1-propyl, 1-Hexyl, 2-Hexyl, 3-Hexyl, 2-Methyl-1-pentyl, 3-Methyl-1-pentyl, 4-Methyl-1-pentyl, 2-Methyl-2-pentyl, 3-Methyl-2-pentyl, 4-Methyl-2-pentyl, 2-Methyl-3-pentyl, 3-Methyl-3-pentyl, 2,2-Dimethyl-1-butyl, 2,3-Dimethyl-1-butyl, 3,3-Dimethyl-1-butyl, 2-Ethyl-1-butyl, 2,3-Dimethyl-2-butyl, 3,3-Dimethyl-2-butyl, 1-Heptyl, 1-Octyl, 1-Nonyl, 1-Decyl, 1-Undecyl, 1-Dodecyl, 1-Tetradecyl, 1-Hexadecyl und 1-Octadecyl. "Substituiertes Alkyl" bedeutet, dass die Alkylgruppe mit einem oder mehreren Substituenten ausgewählt aus Alkyl, gegebenenfalls substituiertem Aryl, gegebenenfalls substituiertem Aralkyl, Alkoxy, Amino, Nitro, Carboxy, Carboalkoxy, Cyano, Alkylamino, Halo, Hydroxy, Hydroxyalkyl, Mercaptyl, Alkylmercaptyl, Trihaloalkyl, Carboxyalkyl oder Carbamoyl substituiert ist.

"Cycloalkyl" bedeutet einen aliphatischen Ring, der von 3 bis 10 Kohlenstoffatome in dem Ring hat. Bevorzugte Cycloalkylgruppen haben von 4 bis 7 Kohlenstoffatome in dem Ring.

"Aralkyl" bedeutet eine Alkylgruppe, die mit einem Arylrest substituiert ist, wobei "Aryl" Phenyl oder Naphthyl bedeutet. "Substituiertes Aralkyl" und "substituiertes Aryl" bedeutet, dass die Arylgruppe oder die Arylgruppe der Aralkylgruppe mit einem oder mehreren Substituenten ausgewählt aus Alkyl, Alkoxy, Amino, Nitro, Carboxy, Carboalkoxy, Cyano, Alkylamino, Halo, Hydroxy, Hydroxyalkyl, Mercaptyl, Alkylmercaptyl, Trihaloalkyl, Carboxyalkyl oder Carbamoyl substituiert ist.

"Alkoxy" bedeutet eine Alkyl-O-Gruppe, in der "Alkyl" die vorstehend beschriebene Bedeutung hat. Nieder-Alkoxy-Gruppen sind bevorzugt. Als beispielhafte Gruppen sind Methoxy, Ethoxy, n-Propoxy, i-Propoxy und n-Butoxy einbezogen.

"Nieder-Alkyl" bedeutet eine Alkylgruppe, die 1 bis 7 Kohlenstoffatome aufweist.

"Alkoxyalkyl" bedeutet eine Alkylgruppe wie vorstehend beschrieben, die mit einer Alkoxygruppe, wie vorstehend beschrieben, substituiert ist.

"Halogen" (oder "halo") bedeutet Chlor (chloro), Fluor (fluoro), Brom (bromo) oder Iod (iodo).

"Heterocyclyl" bedeutet eine ungefähr 4 bis 10-gliedrige Ringstruktur, in der eines oder mehrere der Ringatome ein anderes Element als Kohlenstoff ist, beispielsweise N, O oder S. Heterocyclyl kann aromatisch oder nicht-aromatisch sein, d.h. es kann gesättigt, teilweise oder ganz ungesättigt sein.

Als bevorzugte Heterocyclyl-Gruppen sind einbezogen: Pyridyl, Pyridazinyl, Pyrimidinyl, Isochinolinyl, Chinolinyl, Chinazolinyl Imidazolyl, Pyrrolyl, Furanyl, Thienyl, Thiazolyl, Benzothiazolyl, Piperidinyl, Pyrrolidinyl, Tetrahydrofuranyl, Tetrahydropyranyl und Morphonlinyl-Gruppen.

"Substituiertes Heterocyclyl" bedeutet, dass die Heterocyclyl-Gruppe mit einem oder mehreren Substituenten substituiert ist, wobei als Substituenten einbezogen sind: Alkoxy, Alkylamino, Aryl, Carbalkoxy, Carbamoyl, Cyano, Halo, Heterocyclyl, Trihalomethyl, Hydroxy, Mercaptyl, Alkylmercaptyl oder Nitro.

"Hydroxyalkyl" bedeutet eine Alkylgruppe, die mit einer Hydroxygruppe substituiert ist. Hydroxy-Niederalkyl-Gruppen sind bevorzugt. Als beispielhaft bevorzugte Gruppen sind einbezogen: Hydroxymethyl, 2-Hydroxyethyl, 2-Hydroxypropyl und 3-Hydroxypropyl.

"Carboxyl" bedeutet eine COOH-Gruppe.

"Alkoxycarbonyl" bedeutet eine Alkoxy-C=O-Gruppe.

"Aralkoxycarbonyl" bedeutet eine Aralkyl-O-C=O-Gruppe.

"Aryloxycarbonyl" bedeutet eine Aryl-O-C=O-Gruppe.

"Carbalkoxy" bedeutet einen Carboxyl-Substituenten, der mit einem Alkohol der Formel $C_nH_{2n+1}OH$ verestert ist, wobei n von 1 bis 6 ist.

"Carbamoyl" bedeutet eine

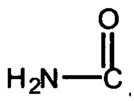

-Gruppe. Alkylcarbamoyl und Dialkylcarbamoyl bedeutet, dass der Stickstoff des Carbamoyls durch eine beziehungsweise zwei Alkylgruppen substituiert ist.

"Alkoxyalkyl" bedeutet eine Alkylgruppe wie vorstehend beschrieben, die mit einer Alkoxygruppe, wie vorstehend beschrieben, substituiert ist.

Verbindungen der vorstehend definierten allgemeinen Formel I sind bekannt und werden beispielsweise in der US-B 3,615,745 beschrieben.

Bei den Haloalkylsulfonen handelt es sich im Sinne der Erfindung um Verbindungen gemäß der allgemeinen Formel I. Gemäß einer bevorzugten Ausführungsform ist die Verbindung bzw. sind die Verbindungen gemäß der allgemeinen Formel I ausgewählt aus der Gruppe bestehend aus 4-Tolyldiiodmethylsulfon, Phenyldiiodmethylsulfon, 4-Tolyldibrommethylsulfon, 4-Tolyltribrommethylsulfon, 4-(Methyl amido)-phenyl-diiodmethylsulfon, n-Heptyldiiodmethylsulfon, 4-Aminophenyldiidmethylsulfon, 4-Chlorphenyldiiodmethylsulfon, 4-tert-Butyl-phenyldiiodmethylsulfon, 3-Tolyl-diiodmethylsulfon, 2-Tolyl-diiodmethylsulfon, 4-Bromphenyldiiodmethylsulfon, 2-Methyl-4-chlorphenyldiiodmethyl-sulfon, α-Naphthyldiiodmethylsulfon, 2-Methyl-4-bromphenyldiiodmethylsulfon, 3-Methyl-4-bromphenylddiiodmethylsulfon, n-Butyl-diiodmethylsulfon, Benzyldiiodmethylsulfon, 2,4-Dimethylphenyldiiodmethylsulfon, 3,4-Dichlorphenyldiiodmethylsulfon, 4-Chlorphenyldibrommethylsulfon, 4-Methoxyphenyldibrommethylsulfon, Ethyldiiodmethylsulfon, tert-butyl-Diiodmethylsulfon, 4-Chlorphenyltribrommethylsulfon, 4-Methoxyphenyltribrommethylsulfon, Benzyliodomethylsulfon, Ethyldiiodmethylsulfon, 2-Methyl-4-tert-butylphenyldiiodmethylsulfon, 2-Nitro-4-methylphenyldibrommethyl-sulfon, 2-Nitro-4-methylphenyltribrommethylsulfon, 3-Tolyltribrommethylsulfon, 4-tert-Butylphenylbrommethylsulfon, 2-Nitro-4-methylphenyliodomethylsulfon, 4-Chlorbenzyldiiodmethylsulfon, 2-Nitro-4-chlorphenyliodomethylsulfon, 2-Nitro-4-chlorphenyltribrommethylsulfon, 4-Nitrophenyldiiodmethylsulfon, 2-Methyl-4-tert-butylphenyltribrom-methylsulfon, 2-Nitro-4-chlorphenyldiiodmethylsulfon, 2-Isopropylphenylbrommethylsulfon, 2-Isopropylphenyldiiodmethylsulfon, 4-Nitrophenyl tribrommethylsulfon, 4-(2,2-Dimethylpropyl)phenyldiiodmethylsulfon, 4-Chlorbenzyldiiodmethylsulfon, Cyclohexyldiiodmethylsulfon, n-Pentyldiiodmethylsulfon, n-Hexyldiiodmethylsulfon, n-Propyldiiodmethylsulfon, n-Octyldiiodmethylsulfon, 4-Methylbenzyldiiodmethylsulfon, 4-Fluorbenzyldiiodmethylsulfon, 4-Brombenzyldiidmethylsulfon, 4-Methoxybenzyldiiodmethylsulfon, 3-Chlorbenzyldiiodmethylsulfon, 3,5-Dimethyldiiodmethylsulfon, 1-Phenyl-2-(diiodmethylsulfonyl)ethan, 3-Brombenzyldiiodmethylsulfon, 2-Naphthylmethyldiiodmethylsulfon, 1-Phenyl-3-(diiodmethylsulfonyl)propan, Isobutyldiiodmethylsulfon, 3,4-Dimethylbenzyldiiodmethylsulfon, 3,3-Dimethylpropyldiiodmethylsulfon, 2,2,4,4-Tetramethylbutyldiiodmethylsulfon, 4-Fluorobenzyldibrommethylsulfon, 3-Chlorbenzyldibrommethylsulfon, 4-Brombenzyldibrommethylsulfon, 3,4-Dichlorbenzyldibrommethylsulfon, 2,4-Dichlorbenzyldibrommethylsulfon, 3-Brombenzyldibrommethylsulfon, 2-Brombenzyldibrommethylsulfon, 2-Chlorobenzyldibrommethylsulfon, 4-Methylbenzyldibrommethylsulfon, 2-Methylbenzyldibrommethylsulfon, 3-Methylbenzyldibrommethylsulfon, 4-Nitrobenzyldibrommethylsulfon, 4-Methoxybenzyldibrommethylsulfon, 2,5-Dimethylbenzyldibrommethylsulfon, 3,4-Dimethylbenzyldibrommethylsulfon, 1-Phenyl-2-dibrommethyl-sulfonylethan, 1-Phenyl-3-(dibrommethylsulfonyl)-propan, Cyclohexyldibrommethylsulfon, n-Heptyldibrommethylsulfon, n-Decyldibrommethylsulfon, n-Hexadecyldibrommethylsulfon, 3-Methylpropyldiiodmethylsulfon und n-Decyldiiodmethylsulfon.

Gemäß einer bevorzugten Ausführungsform der Erfindung ist X Wasserstoff und Y und Z sind Iod. Gemäß dieser bevorzugten Ausführungsform der Erfindung ist die Verbindung gemäß der allgemeinen Formel I Düodmethyl-p-tolylsulfon. Bei Diiodmethyl-p-tolylsulfon, nachfolgend auch DIMTS genannt, handelt es sich um die Verbindung mit der CAS-Nummer 20018-09-1, die in den Chemical Abstracts auch unter den Bezeichnungen 4-Metylphenyl-diiodmethylsulfon, 1-((Diiodmethyl)sulfonyl)-4-methyl-benzol; Diiodmethyl-p-tolyl sulfon und 4-(Diiodmethylsulfonyl)-toluol gelistet ist. Diese Verbindung wird unter dem Markennamen AMICAL™ (beispielsweise unter AMICAL 48) von The Dow Chemical Company vertrieben und weist als Biozid eine gute fungizide Wirksamkeit auf.

Die erfindungsgemäße Biozidzusammensetzung hat den Vorteil, dass das MIT und das Haloalkylsulfon, insbesondere MIT und das Diiodmethyl-p-tolylsulfon synergistisch zusammenwirken und deshalb beim gleichzeitigen Einsatz in geringen Konzentrationen verwendet werden können, verglichen mit niedrigen Konzentrationen im Falle der Einzelkomponenten. Weiterhin kann die erfindungsgemäße Biozidzusammensetzung bei Bedarf ausschließlich mit Wasser als flüssigem Medium hergestellt werden. Diese Biozidzusammensetzungen sind vorteilhafterweise frei von organischen Lösungsmitteln.

Ein weiterer Vorteil der erfindungsgemäßen Biozidzusammensetzung liegt darin, dass das Haloalkylsulfon bzw. die Haloalkylsulfone als Additive geeignet sind, das Auftreten von Ghost Odor in MIT-haltigen Zusammensetzungen bzw. in MIT-haltigen Produkten bzw. Beschichtungsmitteln und Beschichtungen zu vermindern oder gar vollständig zu verhindern.

Die Beschichtungsmittel können dabei technische Produkte und Materialien wie Farben, Lacke, Lasuren und Putze, Emulsionen, Latices und Polymerdispersionen sein. Ferner eignen sich die Additive zur zumindest weitgehenden Verhinderung oder zumindest weitgehenden Verminderung von Ghost Odor in Produkten wie Kreideaufschlämmungen, mineralischen Slurrys, Klebstoffen, Pigmentpasten und Pigmentdispersionen, Verdickern, Flüssigkeiten und Rohstoffen bei der Papierverarbeitung. Vorzugsweise eignen sich die erfindungsgemäßen Verbindungen zur Verhinderung von Ghost Odor in Beschichtungen, die durch Aufbringen der vorstehend genannten Beschichtungsmittel auf Flächen erhältlich sind (Gegebenenfalls ist ein Trocknungsschritt erforderlich). Weiterhin eignen sich die Verbindungen zur vorbeugenden Verhinderung von Ghost Odor, in den entsprechenden Gebinden (*in can*). Unter Gebinde ist im Sinne der vorliegenden Anmeldung ein konserviertes Produkt bzw. Beschichtungsmittel wie eine Farbe, ein Lack, eine Lasur, eine Emulsion, eine Dispersion von Polymeren in wässrigen Medien und eine Polymerdispersion verstanden. Die konservierten Produkte bzw. Beschichtungsmittel werden an späterer Stelle der Anmeldung genauer beschrieben werden.

In einer Ausführungsform der vorliegenden Erfindung enthält die erfindungsgemäße Biozidzusammensetzung das 2-Methylisothiazolin-3-on und das Haloalkylsulfon im Gewichtsverhältnis von (100 bis 1) zu (1 bis 50), vorzugsweise im Gewichtsverhältnis von (20 bis 1) zu (1 bis 10), insbesondere im Gewichtsverhältnis von (10 bis 1) zu (1 bis 2). Gemäß einer weiteren Ausführungsform der Erfindung liegen das 2-Methylisothiazolin-3-on und das Haloalkylsulfon in einem Verhältnis zueinander vor, in denen ein synergistischer Effekt nachgewiesen werden kann. Das 2-Methylisothiazolin-3-on liegt dabei im Bereich von 0,6 bis 99,8 Gew.-% gegenüber dem Haloalkylsulfon im Bereich von 0,2 bis 99,4 Gew.-%, bezogen auf die Gesamtmasse der in der Biozidzusammensetzung enthaltenen Biozide, vor.

In einer bevorzugten Ausführungsform der vorliegenden Erfindung enthält die erfindungsgemäße Biozidzusammensetzung das 2-Methylisothiazolin-3-on und das Haloalkylsulfon, insbesondere das Diiodmethyl-p-tolylsulfon im Gewichtsverhältnis von (100 bis 1) zu (1 bis 50), vorzugsweise im Gewichtsverhältnis von (20 bis 1) zu (1 bis 10), insbesondere im Gewichtsverhältnis von (10 bis 1) zu (1 bis 2). Gemäß einer bevorzugten Ausführungsform der Erfindung liegen das 2-Methylisothiazolin-3-on und das Haloalkylsulfon, insbesondere das Diiodmethyl-p-tolylsulfon in einem Verhältnis zueinander vor, in denen ein synergistischer Effekt nachgewiesen werden kann. Das 2-Methylisothiazolin-3-on liegt dabei im Bereich von 0,6 bis 99,8 Gew.-% gegenüber dem Haloalkylsulfon, insbesondere dem Diiodmethyl-p-tolylsulfon im Bereich von 0,25 bis 99,4 Gew.-%, bezogen auf die Gesamtmasse der in der Biozidzusammensetzung enthaltenen Biozide, vor.

Ein Gemisch enthaltend ausschließlich MIT und ein oder mehrere Haloalkylsulfon(e) in den angegebenen Gewichtsverhältnissen ohne Vorliegen einer weiteren Komponente wird nachstehend als "erfindungsgemäßes Biozidgemisch" bezeichnet werden. Eine "erfindungsgemäße Biozidzusammensetzung" kann neben MIT und einem oder mehreren Haloalkylsulfon(en) in den angegebenen Gewichtsverhältnisses ein oder mehrere weitere Bestandteile aufweisen. Der oder die weiteren Bestandteile können dabei eine mikrobizide Wirkung aufweisen, oder sie können keine mikrobizide Wirkung aufweisen, also etwa ein Lösungsmittel, Dispergiermittel oder Suspensionsmittel sein.

Es ist vorteilhaft, wenn die erfindungsgemäße Biozidzusammensetzung MIT und das Haloalkylsulfon, insbesondere das Diiodmethyl-p-tolylsulfon in einer Gesamtkonzentration von 0,5 bis 50 Gew.-%, bevorzugt von 1 bis 20 Gew.-%, besonders bevorzugt von 2,5 bis 10 Gew.-%, jeweils bezogen auf die gesamte Biozidzusammensetzung, enthält.

In einer weiteren Ausführungsform besteht die erfindungsgemäße Biozidzusammensetzung überwiegend aus MIT/Haloalkylsulfon in den oben angegebenen Mischungsverhältnissen (also dem erfindungsgemäßen Biozidgemisch). Dies bedeutet, dass die erfindungsgemäße Biozidzusammensetzung als Hauptbestandteil das erfindungsgemäße Biozidgemisch, vorzugsweise in einer Menge von gleich oder größer 50 Gew.-%, mehr bevorzugt in einer Menge von gleich oder größer 70 Gew.-%, insbesondere in einer Menge von gleich oder größer 90 Gew.-%, insbesondere in einer Menge von gleich oder größer 95 Gew.-%, bezogen auf die Gesamtmasse an biozidem Wirkstoff, enthält. Daneben kann mindestens ein weiteres Biozid vorhanden sein, ebenso wie ein oder mehrere Lösungsmittel, Dispergiermittel oder Suspensionsmittel.

Gemäß einer weiteren Ausführungsform der Erfindung besteht die erfindungsgemäße Biozidzusammensetzung im Wesentlichen aus dem erfindungsgemäßen Biozidgemisch, d.h., dass neben dem Gemisch wohl noch ein oder auch mehrere andere Biozide enthalten sein können, diese aber in einer solchen Menge vorliegen, in der kein Beitrag des jeweiligen von den Komponenten des Gemischs verschiedenen Biozids zum Gesamteffekt der entstehenden Mischung vorliegt. Wenn also die biozide Wirkung einer erfindungsgemäßen Biozidzusammensetzung, die - neben den Komponenten des erfindungsgemäßen Biozidgemischs als wesentlichem Bestandteil - noch ein oder mehrere weitere Biozide in untergeordneter bzw. geringfügigerer Konzentration aufweist, nicht verändert ist gegenüber dem Einsatz des erfindungsgemäßen Biozidgemischs, wird dieses im Zusammenhang mit der vorliegenden Erfindung als "im Wesentlichen bestehend" bezeichnet. Es können ein oder mehrere weitere Bestandteile ohne eine biozide Wirkung vorhanden sein, etwa Lösungsmittel.

In einer weiteren Ausführungsform kann die erfindungsgemäße Biozidzusammensetzung aus den Komponenten des erfindungsgemäßen Biozidgemischs als einzige biozide Wirkstoffe bestehen, also einem Wirkstoffgehalt von 100% MIT/Haloalkylsulfon in den angegebenen Gewichtsverhältnissen. In einem solchen Fall ist es lediglich möglich, dass ein oder mehrere weitere Bestandteile ohne eine biozide Wirkung vorhanden sind, etwa Lösungsmittel.

Gemäß einer bevorzugten Ausführungsform betrifft die Erfindung eine Biozidzusammensetzung, enthaltend als mikrobizide Wirkkomponenten 2-Methylisothia-zolin-3-on und Haloalkylsulfon, insbesondere Diiodmethyl-p-tolylsulfon und MIT, wobei Biozidzusammensetzungen mit einem Gehalt an 5-Chlor-2-methylisothiazolin-3-on ausgenommen sind. Gemäß dieser Ausführungsform der Erfindung ist die erfindungsgemäße Biozidzusammensetzung frei von 5-Chlor-2-methylisothiazolin-3-on (CMIT). Dies bedeutet, dass CMIT in einer Menge von kleiner oder gleich 5 Gew.-%, vorzugsweise kleiner oder gleich 2 Gew.-%, besonders bevorzugt kleiner 0,1 Gew.-%, insbesondere kleiner oder gleich 0,01 Gew.-% in der Biozidzusammensetzung vorhanden ist. Es ist auch möglich, dass kein CMIT enthalten ist (also dies mit den üblichen Analysemethoden nicht nachgewiesen werden kann). Gemäß dieser Ausführungsform betrifft die Erfindung ebenso konservierte Produkte, welche die erfindungsgemäße Biozidzusammensetzung enthalten und frei von 5-Chlor-2-methylisothiazolin-3-on (CMIT) sind. Dies bedeutet, dass CMIT in einer Menge von kleiner oder gleich 5 Gew.-%, vorzugsweise kleiner oder gleich 2 Gew.-%, besonders bevorzugt kleiner 0,1 Gew.-%, insbesondere kleiner oder gleich 0,01 Gew.-% in der Biozidzusammensetzung vorhanden ist. Es ist auch möglich, dass kein CMIT enthalten ist (also dies mit den üblichen Analysemethoden nicht nachgewiesen werden kann).

In einer vorteilhaften Ausführungsform liegt die Biozidzusammensetzung in Form einer flüssigen Zubereitung vor, beispielsweise als Lösung, Suspension oder Dispersion in einem flüssigen Medium. Selbstverständlich kann die erfindungsgemäße Biozidzusammensetzung auch direkt in einem zu konservierenden Produkt gemischt werden. Dies geschieht durch Zugabe der einzelnen mikrobiziden Wirkkomponenten zu dem zu konservierenden Produkt.

Es ist zweckmäßig, wenn die erfindungsgemäße Biozidzusammensetzung für die Anwendung in Kombination mit einem polaren oder unpolaren flüssigen Medium vorliegt.

Bevorzugte polare flüssige Medien sind Wasser, aliphatische Alkohole mit 1 bis 4 Kohlenstoffatomen, zum Beispiel Ethanol und Isopropanol, ein Glykol, zum Beispiel Ethylenglykol, Diethylenglykol, 1,2-Propylenglykol, Dipropylenglykol und Tripropylenglykol, ein Glykolether, wie Butylglykol und Butyldiglykol, ein Glykolester, wie Butylglykolacetat oder 2,2,4-Trimethylpentandiolmonoisobutyrat, ein Polyethylenglykol, ein Propylenglykol, N,N-Dimethylformamid oder ein Gemisch aus zwei oder mehr solcher Medien. Das polare flüssige Medium ist insbesondere Wasser und/oder Glykol.

Als unpolare flüssige Medien können beispielsweise Aromaten, vorzugsweise Xylol und Toluol dienen, auch diese können alleine oder als Gemische aus zwei oder mehreren solcher Medien eingesetzt werden.

Die erfindungsgemäße Biozidzusammensetzung kann auch gleichzeitig mit einem polaren oder einem unpolaren flüssigen Medium kombiniert werden.

Die erfindungsgemäße Biozidzusammensetzung ist in ihrem pH-Wert allgemein auf einen pH-Wert von 4 bis 7, bevorzugt auf einen Wert von 5 bis 7 eingestellt.

Allgemein ist es möglich, die erfindungsgemäße Biozidzusammensetzung durch den Zusatz weiterer Wirkstoffe speziellen Anwendungsgebieten anzupassen, beispielsweise im Sinne einer erhöhten Wirkung oder einer verbesserten Verträglichkeit mit den vor den Mikroorganismen schützenden Stoffen. Diese weiteren Stoffe sind dem Fachmann auf dem Gebiet der Biozide bekannt und können von diesen in Abhängigkeit der Anwendung der erfindungsgemäßen Biozidzusammensetzung ausgewählt werden.

Spezielle Beispiele für solch weitere biozide Wirkstoffe sind nachfolgend angegeben. Der eine oder die mehreren der nachfolgend genannten weiteren bioziden Wirkstoffe liegen dabei im Verhältnis von (10:1) bis (1:10), bezogen auf die Gesamtmenge an MIT und das Haloalkylsulfon vor.

Benzylalkohol; 2,4-Dichlorbenzylalkohol; 2-Phenoxyethanol;, Phenylethylalkohol; Formaldehyd-Depotstoffe, 5-Brom-5-nitro-1,3-dioxan; Bronopol; Formaldehyd und Formaldehyd-Depotstoffe, wie 2-Phenoxyethanolhemiformal, Dimethyloldimethylhydantoin; N-Methylolchloracetamid; N-Methylolharnstoff; N,N'-Dimethylolharnstoff; Benzylformal; 4,4-Dimethyl-1,3-oxazolidin; 1,3,5-Hexahydrotriazinderivate; Ethylenglykolhemiformal; Glyoxal; Glutardialdehyd; Sorbinsäure; Benzoesäure; Salicylsäure; p-Hydroxybenzoesäureester; Chloracetamid; Phenole, wie p-Chlor-m-kresol und o-Phenylphenol; Quartäre Ammoniumverbindungen, wie N-Alkyl-N,N-dimethylbenzyl-ammoniumchlorid und Di-n-decyldimethylammoniumchlorid; Cetylpyridiniumchlorid; Diguanidin; Polybiguanid; Chlorhexidin; 1,2-Dibrom-2,4-dicyanobutan; 3,5-Dichlor-4-hydroxybenzaldehyd; Tetra-(hydroxymethyl)-phosphoniumsalze; Dichlorophen; 2,2-Dibrom-3-nitrilopropionsäureamid; 3-Iod-2-propinyl-N-butylcarbamat; Methyl-N-benzimidazol-2-ylcarbamat; 2,2'-Dithio-dibenzoesäure-di-N-methylamid; 2-Thiocyanomethylthiobenzthiazol; C-Formale wie 2-Hydroxymethyl-2-nitro-1,3-propandiol und 2-Brom-2-nitropropan-1,3-diol; Methylenbisthiocyanat; Umsetzungsprodukte von Allantoin (mit Formaldehyd); N-Alkyl-1,2-benzisothiazolin-3-one mit 1 bis 8 C-Atomen im Alkylrest; 1,2-Benzisothiazolin-3-on, N-Methyl-1,2-benzisothiazolin-3-on; N-Butyl-1,2-benzisothia-zolin-3-on; 4,5-Dichlor-2-n-octylisothiazolin-3-on (DCOIT); 2-n-Octylisothiazolin-3-on (OIT), 4,5-Trimethylen-2-methylisothiazolin-3-on; 3-Iod-2-propinyl-N-butylcarbamat; Methyl-N-benzimidazol-2-ylcarbamat; 2-Thiocyanomethylthiobenzthiazol; Methylenbisthiocyanat; Chlorothalonil; Propiconazol; Tebuconazol; TCMTB; Terbutryn, Cyfluthrin, Isoproturon, Triclosan, Diuron und Irgarol. Silber und Silberverbindungen, wie elementares Silber bzw. Silbersalze, wie AgCl.

Formaldehyd-Depotstoffe sind Verbindungen, die in einer beabsichtigten chemischen Reaktion Formaldehyd in mikrobiologisch wirksamen Mengen abgeben. Derartige Verbindungen sind beispielsweise in dem Standard-Nachschlagewerk auf dem Mikrobizid-Gebiet Wilfried Paulus: Directory of Microbicides for the Protection of Materials and Processes. Springer Netherland, Berlin 2006, ISBN 1-402-04861-0 in dem Kapitel "Formaldehyd Releasing Compounds" definiert und genannt. Wichtig bei den Formaldehyd-Depotstoffen ist dabei das Vorliegen bestimmter funktioneller Gruppen, beispielsweise einer Hydroxymethyl-Gruppe. Beispiele für Formaldehyd-Depotstoffe sind N-Formale, wie Tetramethylolacetylendiharnstoff (TMAD); N,N'-Dimethylolharnstoff; N-Methylolharnstoff; Dimethyloldimethylhydantoin; N-Methylolchloracetamid; Umsetzungsprodukte von Allantoin; Glykolformale, wie Ethylenglykolformal; Butyldiglykolformal; Benzylformal.

Gemäß der Erfindung sind bevorzugte weitere biozide Wirkstoffe ein oder mehrere Biozide aus der Gruppe 2-Octyl-2H-isothiazolin-3-on, Benzisothiazolin-3-on, N-Methyl-Benzisothiazolin-3-on, N-Butyl-Benzisothiazolin-3-on, 2,2'-Dithiobis[N-methylbenzylamid], Formaldehyd, Tetramethylolacetylendiharnstoff (TMAD), Silber, Eisen-, Zink-, Kupfer- und Natriumpyrithion, 2-Brom-2-nitropropan-1,3-diol, 2,2-Dibrom-3-nitrilopro-pionsäureamid (DBNPA), 4,5-Dichlor-2-n-octylisothiazolin-3-on (DCOIT) und 3-Iod-2-propinyl-N-butylcarbamat (IPBC).

Gemäß einer weiteren Ausführungsform betrifft die Erfindung Biozidzusammensetzungen, welche:

(a) 2-Methylisothiazolin-3-on, Diiodmethyl-p-tolylsulfon und 2-Octyl-2H-isothiazolin-3-on umfassen,
(b) 2-Methylisothiazolin-3-on, Diiodmethyl-p-tolylsulfon und Benzisothiazolin-3-on umfassen,
(c) 2-Methylisothiazolin-3-on, Diiodmethyl-p-tolylsulfon und N-Methyl-Benzisothia-zolin-3-on umfassen,
(d) 2-Methylisothiazolin-3-on, Diiodmethyl-p-tolylsulfon und N-Butyl-Benzisothia-zolin-3-on umfassen,
(e) 2-Methylisothiazolin-3-on, Diiodmethyl-p-tolylsulfon und 2,2'-Dithiobis[N-methylbenzylamid] (Densil P™),
(f) 2-Methylisothiazolin-3-on, Diiodmethyl-p-tolylsulfon und Formaldehyd,
(g) 2-Methylisothiazolin-3-on, Diiodmethyl-p-tolylsulfon und einen oder mehrere der vorstehend genannten Formaldehyd-Depotstoffe,
(h) 2-Methylisothiazolin-3-on, Düodmethyl-p-tolylsulfon und Tetramethylolacetylendiharnstoff (TMAD),
(i) 2-Methylisothiazolin-3-on, Diiodmethyt-p-tolylsulfbn und Silber,
(j) 2-Methylisothiazolin-3-on, Diiodmethyl-p-tolylsulfon und ein oder mehrere Pyrithion(e) ausgewählt aus der Gruppe

Eisen-, Zink-, Kupfer- und Natriumpyrithion,
(k) 2-Methylisothiazolin-3-on, Diiodmethyl-p-tolylsulfon und 2-Brom-2-nitropropan-1,3-diol,
(l) 2-Methylisothiazolin-3-on, Diiodmethyl-p-tolylsulfon und 2,2-Dibrom-3-nitrilo-propionsäureamid (DBNPA),
(m)2-Methylisothiazolin-3-on, Diiodmethyl-p-tolylsulfon und 4,5-Dichlor-2-n-Octylisothiazolin-3-on (DCOIT), sowie
(n) 2-Methylisothiazolin-3-on, Diiodmethyl-p-tolylsulfon und 3-Iod-2-propinyl-N-butylcarbamat, umfassen.

Weiterhin betrifft die Erfindung konservierte Produkte, welche eine der vorstehend genannten Biozidzusammensetzungen (a), (b), (c), (d), (e), (f), (g), (h), (i), (j), (k), (l), (m) oder (n) umfassen.

Allgemein beträgt bei den vorstehend genannten Biozidzusammensetzungen (a), (b), (c), (d), (e), (f), (g), (h), (i), (j), (k), (l), (m) oder (n) das Verhältnis von MIT und Diiodmethyl-p-toloylsulfon zu dem weiteren Wirkstoff (1 bis 10) zu (10 bis 1), bevorzugt (1 bis 2) zu (2 bis 1).

Gemäß einer bevorzugten Ausführungsform enthält die Biozidzusammensetzung (a) die bioziden Wirkstoffe 2-Methylisothiazolin-3-on, Diiodmethyl-p-tolylsulfon und 2-Octyl-2H-isothiazolin-3-on in einem Verhältnis von (1 bis 10 Gew.-%) zu (0,2 bis 5 Gew.-%) zu (2 bis 20 Gew.-%) vor. Gemäß einer bevorzugten Ausführungsform sind die Konzentrationen der bioziden Wirkstoffe in der Anwendung, das heißt im Gebinde, wie folgt: 25 bis 250 ppm MIT, 50 bis 2000 ppm OIT und 2 bis 50 ppm DIMTS.

Gemäß einer weiteren bevorzugten Ausführungsform der Erfindung enthält die Biozidzusammensetzung (b) die bioziden Wirkstoffe 2-Methylisothiazolin-3-on, Diiodmethyl-p-tolylsulfon und Benzisothiazolin-3-on in einem Verhältnis von 2 bis 20 Gew.-% (MIT) zu 0,2 bis 5 Gew.-% (DIMTS) zu 2 bis 20 Gew.-% (BIT). Gemäß einer bevorzugten Ausführungsform sind die Konzentrationen der bioziden Wirkstoffe in der Anwendung, das heißt im Gebinde, wie folgt: 25 bis 250 ppm MIT, 25 bis 500 ppm BIT und 2 bis 50 ppm DIMTS.

Gemäß einer weiteren bevorzugten Ausführungsform der Erfindung enthält die Biozidzusammensetzung (c) die bioziden Wirkstoffe 2-Methylisothiazolin-3-on, Diiodmethyl-p-tolylsulfon und N-Methyl-Benzisothiazolin-3-on in einem Verhältnis von 2 bis 20 Gew.-% zu 0,2 bis 5 Gew.-% zu 2 bis 20 Gew.-%. Gemäß einer bevorzugten Ausführungsform sind die Konzentrationen der bioziden Wirkstoffe in der Anwendung, das heißt im Gebinde, wie folgt: 25 bis 250 ppm MIT, 25 bis 250 ppm N-Methyl-BIT und 2 bis 50 ppm DIMTS.

Gemäß einer weiteren bevorzugten Ausführungsform der Erfindung enthält die Biozidzusammensetzung (d) die bioziden Wirkstoffe 2-Methylisothiazolin-3-on, Diiodmethyl-p-tolylsulfon und N-Butyl-Benzisothiazolin-3-on in einem Verhältnis von 2 bis 20 Gew.-% zu 0,2 bis 5 Gew.-% zu 2 bis 20 Gew.-%. Gemäß einer bevorzugten Ausführungsform sind die Konzentrationen der bioziden Wirkstoffe in der Anwendung, das heißt im Gebinde, wie folgt: 25 bis 250 ppm MIT, 50 bis 2000 ppm N-butyl-BIT und 2 bis 50 ppm DIMTS.

Gemäß einer weiteren bevorzugten Ausführungsform der Erfindung enthält die Biozidzusammensetzung (e) die bioziden Wirkstoffe 2-Methylisothiazolin-3-on, Diiodmethyl-p-tolylsulfon und 2,2'-Dithiobis[N-methylbenzylamid] in einem Verhältnis von 2 bis 20 Gew.-% zu 0,2 bis 5 Gew.-% zu 2 bis 20 Gew.-%. Gemäß einer bevorzugten Ausführungsform sind die Konzentrationen der bioziden Wirkstoffe in der Anwendung, das heißt im Gebinde, wie folgt: 25 bis 250 ppm MIT, 25 bis 2000 ppm DTBMA und 2 bis 50 ppm DIMTS.

Gemäß einer weiteren bevorzugten Ausführungsform der Erfindung enthält die Biozidzusammensetzung (f) die bioziden Wirkstoffe 2-Methylisothiazolin-3-on, Diiodmethyl-p-tolylsulfon und Formaldehyd, in einem Verhältnis von 2 bis 20 Gew.-% zu 0,2 bis 5 Gew.-% zu 2 bis 20 Gew.-%. Gemäß einer bevorzugten Ausführungsform sind die Konzentrationen der bioziden Wirkstoffe in der Anwendung, das heißt im Gebinde, wie folgt: 25 bis 250 ppm MIT, 25 bis 500 ppm Formaldehyd und 2 bis 50 ppm DIMTS.

Gemäß einer weiteren bevorzugten Ausführungsform der Erfindung enthält die Biozidzusammensetzung (g) die bioziden Wirkstoffe 2-Methylisothiazolin-3-on, Diiodmethyl-p-tolylsulfon und den Formaldehyd Depotstoff, in einem Verhältnis von 2 bis 20 Gew.-% zu 0,2 bis 5 Gew.-% zu 2 bis 20 Gew.-%. Gemäß einer bevorzugten Ausführungsform sind die Konzentrationen der bioziden Wirkstoffe in der Anwendung, das heißt im Gebinde, wie folgt: 25 bis 250 ppm MIT, 25 bis 2000 ppm Formaldehyd-Depotstoff und 2 bis 50 ppm DIMTS.

Gemäß einer weiteren bevorzugten Ausführungsform der Erfindung enthält die Biozidzusammensetzung (h) die bioziden Wirkstoffe 2-Methylisothiazolin-3-on, Diiodmethyl-p-tolylsulfon und den Tetramethylolacetylendiharnstoff (TMAD), in einem Verhältnis von 2 bis 20 Gew.-% zu 0,2 bis 5 Gew.-% zu 2 bis 20 Gew.-%. Gemäß einer bevorzugten Ausführungsform sind die Konzentrationen der bioziden Wirkstoffe in der Anwendung, das heißt im Gebinde, wie folgt: 25 bis 250 ppm MIT, 50 bis 1000 ppm Tetramethylolacetylendiharnstoff (TMAD) und 2 bis 50 ppm DIMTS.

Gemäß einer weiteren bevorzugten Ausführungsform der Erfindung enthält die Biozidzusammensetzung (i) die bioziden Wirkstoffe 2-Methylisothiazolin-3-on, Diiodmethyl-p-tolylsulfon und Silber, in einem Verhältnis von 2 bis 20 Gew.-% zu 0,2 bis 5 Gew.-% zu 2 bis 20 Gew.-%. Gemäß einer bevorzugten Ausführungsform sind die Konzentrationen der bioziden Wirkstoffe in der Anwendung, das heißt im Gebinde, wie folgt: 25 bis 250 ppm MIT, 1 bis 100 ppm Silber und 2 bis 50 ppm DIMTS.

Gemäß einer weiteren bevorzugten Ausführungsform der Erfindung enthält die Biozidzusammensetzung (j) die bioziden Wirkstoffe 2-Methylisothiazolin-3-on, Diiodmethyl-p-tolylsulfon und das eine oder die mehreren Pyrithion(e) ausgewählt aus der Gruppe Eisen-, Zink-, Kupfer- und Natriumpyrithion, in einem Verhältnis von 2 bis 20 Gew.-% zu 0,2 bis 5 Gew.-% zu 2 bis 20 Gew.-%. Gemäß einer bevorzugten Ausführungsform sind die Konzentrationen der bioziden Wirkstoffe in der Anwendung, das heißt im Gebinde, wie folgt: 25 bis 250 ppm MIT, 25 bis 2000 ppm Pyrithion und 2 bis 50 ppm DIMTS.

Gemäß einer weiteren bevorzugten Ausführungsform der Erfindung enthält die Biozidzusammensetzung (k) die bioziden Wirkstoffe 2-Methylisothiazolin-3-on, Diiodmethyl-p-tolylsulfon und 2-Brom-2-nitropropan-1,3-diol, in einem Verhältnis von 2 bis 20 Gew.-% zu 0,2 bis 5 Gew.-% zu 2 bis 20 Gew.-%. Gemäß einer bevorzugten Ausführungsform sind die Konzentrationen der bioziden Wirkstoffe in der Anwendung, das heißt im Gebinde, wie folgt: 25 bis 250 ppm MIT, 25 bis 500 ppm 2-Brom-2-nitropropan-1,3-diol und 2 bis 50 ppm DIMTS.

Gemäß einer weiteren bevorzugten Ausführungsform der Erfindung enthält die Biozidzusammensetzung (1) die bioziden Wirkstoffe 2-Methylisothiazolin-3-on, Diiodmethyl-p-tolylsulfon und 2,2-Dibrom-3-nitrilopropionsäureamid (DBNPA), in einem Verhältnis von 2 bis 20 Gew.-% zu 0,2 bis 5 Gew.-% zu 2 bis 20 Gew.-%. Gemäß einer bevorzugten Ausführungsform sind die Konzentrationen der bioziden Wirkstoffe in der Anwendung, das heißt im Gebinde, wie folgt: 25 bis 250 ppm MIT, 25 bis 1000 ppm 2,2-Dibrom-3-nitrilopropionsäureamid (DBNPA) und 2 bis 50 ppm DIMTS.

Gemäß einer weiteren bevorzugten Ausführungsform der Erfindung enthält die Biozidzusammensetzung (m) die bioziden Wirkstoffe 2-Methylisothiazolin-3-on, Diiodmethyl-p-tolylsulfon und 4,5-Dichlor-2-n-Octylisothiazolin-3-on (DCOIT), in einem Verhältnis von 2 bis 20 Gew.-% zu 0,2 bis 5 Gew.-% zu 2 bis 20 Gew.-%. Gemäß einer bevorzugten Ausführungsform sind die Konzentrationen der bioziden Wirkstoffe in der Anwendung, das heißt im Gebinde, wie folgt: 25 bis 250 ppm MIT, 25 bis 2000 ppm 4,5-Dichlor-2-n-Octylisothiazolin-3-on (DCOIT) und 2 bis 50 ppm DIMTS.

Gemäß einer weiteren bevorzugten Ausführungsform der Erfindung enthält die Biozidzusammensetzung (n) die bioziden Wirkstoffe 2-Methylisothiazolin-3-on, Diiodmethyl-p-tolylsulfon und 3-Iod-2-propinyl-N-butylcarbamat, in einem Verhältnis von 2 bis 20 Gew.-% zu 0,2 bis 5 Gew.-% zu 2 bis 20 Gew.-%. Gemäß einer bevorzugten Ausführungsform sind die Konzentrationen der bioziden Wirkstoffe in der Anwendung, das heißt im Gebinde, wie folgt: 25 bis 250 ppm MIT, 25 bis 2000 ppm 3-Iod-2-propinyl-N-butylcarbamat und 2 bis 50 ppm DIMTS.

Gemäß einer Ausführungsform der Erfindung kann das in den vorstehend definierten Biozidzusammensetzungen (a), (b), (c), (d), (e), (f), (g), (h), (i), (j), (k), (l), (m) oder (n), sowie in den entsprechenden konservierten Produkten enthaltene Diiodmethyl-p-tolylsulfon durch eine oder mehrere Verbindung(en) der allgemeinen Formel I ersetzt sein. Die jeweiligen Verhältnisse und Konzentrationen der Verbindung(en) der allgemeinen Formel I entsprechen den vorstehend im Zusammenhang mit Diiodmethyl-p-toloylsulfon offenbarten.

Gemäß einer Ausführungsform der Erfindung sind die vorstehend definierten Biozidzusammensetzungen bzw. konservierten Produkte (a), (b), (c), (d), (e), (f), (g), (h), (i), (j), (k), (l), (m) oder (n) gemäß der vorstehenden Definition frei von CMIT.

Gemäß einer Ausführungsform der Erfindung enthalten die vorstehend definierten Biozidzusammensetzungen (a), (b), (c), (d), (e), (f), (g), (h), (i), (j), (k), (l), (m) oder (n) neben den genannten bioziden Wirkstoffen keine weiteren biozide Wirkstoffe.

Die erfindungsgemäße Biozidzusammensetzung, sowie die Biozidzusammensetzungen (a), (b), (c), (d), (e), (f), (g), (h), (i), (j), (k), (l), (m) oder (n) kann bzw. können daneben noch andere übliche Bestandteile enthalten, die dem Fachmann auf dem Gebiet der Biozide als Zusatzstoffe bekannt sind. Biese sind beispielsweise Verdickungsmittel, Entschäumer, Stoffe zur Einstellung und Pufferung des pH-Werts, Duftstoffe, Dispergierhilfsmittel und färbende oder verfärbungsvermeidende Stoffe, Komplexierungsagenzien und Stabilisatoren.

Das verwendete Lösungsmittel ist eines ausgewählt aus der Gruppe Wasser, aliphatische Alkohole mit 1 bis 4 Kohlenstoffatomen, wie Ethanol und Isopropanol, ein Glykol, wie Ethylenglykol, Diethylenglykol, 1,2-Propylenglykol, Dipropylenglykol und Tripropylenglykol, ein Glykolether, wie Butylglykol und Butyldiglykol, ein Glykolester, wie Butylglykolacetat oder 2,2,4-Trimethylpentandiolmonoisobutyrat, ein Polyethylenglykol, ein Propylenglykol, N,N-Dimethylformamid oder ein Gemisch aus zwei oder mehr davon. Das polare flüssige Medium ist insbesondere Wasser und/oder Glykol.

Die als mikrobiozide Wirkkomponente eingesetzten Isothiazolin-3-one sind bekannte Stoffe und sind als solche im Handel erhältlich oder nach bekannten Methoden herzustellen.

Die erfindungsgemäße Biozidzusammensetzung kann zur Konservierung von Produkten auf sehr unterschiedlichen Gebieten eingesetzt werden. Sie eignet sich beispielsweise für den Einsatz als Mittel zur Konservierung von Ligninsulfonaten und Stärkepräparationen, sowie für den Einsatz in Anstrichmitteln, wie z. B. Farben, Lacken, Lasuren und Putzen, in Emulsionen, Latices, Polymerdispersionen, Kreideaufschlämmungen, mineralischen Slurrys, keramischen Massen, Klebstoffen, Duftstoffen, kaseinhaltigen Produkten, stärkehaltigen Produkten, Bitumenemulsionen, Tensidlösungen, Kraftstoffen, Reinigungsmitteln, Pigmentpasten und Pigmentdispersionen, Tinten, lithographischen Flüssigkeiten, Verdickern, kosmetischen Produkten, Toilettenartikeln, Wasserkreisläufen, Flüssigkeiten bei der Papierverarbeitung, Flüssigkeiten bei der Holzverarbeitung, Flüssigkeiten bei der Erdölgewinnung, Flüssigkeiten bei der Lederherstellung, Flüssigkeiten bei der Textilherstellung, Bohr- und Schneidölen, hydraulischen Flüssigkeiten und Kühlschmierstoffen gegen den Befall durch beispielsweise Bakterien, filamentöse Pilze, Hefen und Algen.

Vorzugsweise wird die erfindungsgemäße Biozidzusammensetzung gegen den Befall von Mikroorganismen

in Produkten, wie Ligninsulfonaten und Stärkepräparationen sowie in Anstrichmitteln, wie z. B. Farben, Lacken, Lasuren und Putzen, in Emulsionen, Latices, Polymerdispersionen, Klebstoffen, Reinigungsmitteln, mineralischen Slurrys, keramischen Massen, Pigmentpasten und Pigmentdispersionen sowie Dichtstoffen eingesetzt. Besonders bevorzugte Einsatzgebiete sind die Konservierung von Ligninsulfonaten, Stärkepräparationen, sowie die Konservierung von Wasserkreisläufen, Flüssigkeiten bei der Papierverarbeitung, Flüssigkeiten bei der Holzverarbeitung, Flüssigkeiten bei der Erdölgewinnung, Flüssigkeiten bei der Lederherstellung, Flüssigkeiten bei der Textilherstellung, Bohr- und Schneidölen, hydraulischen Flüssigkeiten und Kühlschmierstoffen.

Besonders bevorzugt wird die erfindungsgemäße Biozidzusammensetzung zur Konservierung von Anstrichmitteln wie z. B. Farben, Lacken, Lasuren und Putzen sowie Klebstoffen für den Innenbereich verwendet. Unter dem Begriff "Innenbereich" ist im Rahmen der Erfindung insbesondere die Anwendung in Räumen zu verstehen.

Bei der praktischen Anwendung kann die Biozidzusammensetzung entweder als fertiges Gemisch oder durch getrennte Zugabe der mikrobiziden Wirkkomponenten der Zusammensetzung in den zu konservierenden Stoff bzw. das zu konservierende Produkt eingebracht werden.

In dem mit der erfindungsgemäßen Biozidzusammensetzung zu konservierenden Stoff bzw. Produkt ist das MIT vorzugsweise in einer Menge von 5 bis 500 ppm, bevorzugt in einer Menge von 5 bis 200 ppm, bevorzugt in einer Menge von 10 bis 150 ppm, insbesondere bevorzugt in einer Menge von 20 bis 100 ppm, enthalten. Die Menge des Diiodmethyl-p-tolylsulfons in dem zu konservierenden Stoff bzw. Produkt beträgt vorzugsweise 1 bis 500 ppm, bevorzugt 1 bis 100 ppm, besonders bevorzugt 1 bis 50 ppm, insbesondere bevorzugt 5 bis 25 ppm. Zur Verhinderung des Auftretens von Ghost Odor sind Konzentrationen an Haloalkylsulfon von 0,1 ppm bis 25 ppm bevorzugt.

Gemäß einer Ausführungsform der Erfindung liegt die erfindungsgemäße Biozidzusammensetzung als Konzentrat vor, welches den zu konservierenden Stoffen bzw. Produkten zugegeben wird. Das Konzentrat weist vorteilhafterweise das MIT in einer Menge von 0,5 bis 50 Gew.-%, bevorzugt in einer Menge von 1 bis 20 Gew.-%, besonders bevorzugt in einer Menge von 2,5 bis 10 Gew.-%, bezogen auf die Gesamtmasse des Konzentrats, auf. Die Menge an Diiodmethyl-p-tolylsulfon in dem Konzentrat beträgt 0,5 bis 50 Gew.-%, bevorzugt 1 bis 20 Gew.-%, besonders bevorzugt 1 bis 5 Gew.-%, bezogen auf die Gesamtmasse des Konzentrats.

Die erfindungsgemäße Biozidzusammensetzung kann hergestellt werden, indem die Bestandteile unter Rühren in jeder Reihenfolge bei einer Temperatur von 25 +/- 20 °C gemischt werden. Gemäß einer bevorzugten Ausführungsform der Erfindung wird zur Herstellung der Biozidzusammensetzung das MIT unter Rühren in Wasser gelöst und das Diiodmethyl-p-tolylsulfon in die Lösung dispergiert. Dabei können zur Formulierung bzw. Stabilisierung dem Fachmann bekannte Dispergierhilfsmittel, wie dispergierende, wasserlösliche Polymere (allg. Polyanionen) wie Polyacrylsäuren mit einem Molekulargewicht von 1.000 bis 100.000 bzw. Copolymere Acrylsäure mit Maleinsäureanhydrid mit einem Molekulargewicht von 1.000 bis 100.000, aromatische Sulfonsäurekondensate wie Phenolsulfonsäure, Naphtalinsulfonsäure mit Formaldehyd, sowie Siliconharze eingesetzt werden. Ferner können Stabilisatoren wie Xanthane, modifizierte Zellulose, wie Methylzellulose, Polyurethanverdicker sowie Kieselsäure enthalten sein. Ebenfalls anwesend können dem Fachmann bekannte Netzmittel, wie Dioctylsulfosuccinat, $C_{10}$ bis $C_{13}$ Fettalkoholethoxylate, EO/PO Blockpolymere, Sulfonate, sowie Entschäumer wie Silikonentschäumer und Füllstoffe, wie Talkum, Kaoline, Titandioxid, Silikate, pyrrogene Kieselsäure und/oder Zeolithe sein.

Ein unerwarteter Vorteil der vorliegenden Erfindung besteht darin, dass synergistische biozide Aktivität erzielt wird, wenn das MIT zusammen mit dem Diiodmethyl-p-tolylsulfon als Biozid eingesetzt wird.

Die folgenden Beispiele dienen zur weiteren Veranschaulichung der vorliegenden Erfindung.

Beispiel 1 Untersuchung der synergistischen Wirkung

Es wurde der Synergismus einer Kombination von MIT mit Diiodmethyl-p-toloylsulfon getestet. Als Testorganismen wurden das Gram-negative Bakterium *Pseudomonas aeruginosa* (ATCC 9027) bzw. der Schimmelpilz *Aspergillus niger* (ATCC16404) verwendet. Dazu wurden Gemische mit unterschiedlichen Konzentrationen an MIT und Diiodmethyl-p-tolylsulfon hergestellt sowie bezüglich ihrer Wirkung auf *Pseudomonas aeruginosa* bzw. *Aspergillus niger* überprüft. Die Wirkstoffgemische wurden dabei in den entsprechenden Konzentrationen in Selektivnährböden (Nutrient-Agar für *Pseudomonas aeruginosa* und Sabouraud-Glucose-Agar für *Aspergillus niger*) eingebracht und die Prüforganismen ebenfalls in den Agar inkorporiert. Die Zelldichte im Agar lag jeweils bei $10^6$ Keimen pro ml bei *Pseudomonas aeruginosa* und bei $10^5$ Sporen pro ml für *Aspergillus niger.*

Die Inkubationszeit betrug 48 (Bakterien) bzw. 72 (Pilze) Stunden bei 30°C respektive 25 °C. Anschließend wurde visuell auf Wachstum von *Pseudomonas aeruginosa* bzw. *Aspergillus niger* geprüft. Das Wachstum zeigte sich bei *Pseudomonas aeruginosa* durch Trübung bzw. grünliche Einfärbung des Nährbodens bzw. durch Koloniebildung auf der Agaroberfläche. Das Wachstum zeigte sich bei *Aspergillus niger* durch Kolonie- bzw. Myzelbildung auf der Agaroberfläche. Auf diese Weise wurden die minimalen Hemmkonzentrationen (MHK) der beiden Wirkstoffe einzeln und in Kombination bestimmt. Die MHK ist diejenige Konzentration, bei der keine Trübung, Einfärbung des Agars oder Koloniebildung auf der Agaroberfläche (*Pseudomonas aeruginosa*) bzw. keine Kolonie- bzw. Myzelbildung auf der

Agaroberfläche (*Aspergillus niger*) mehr auftritt.

Der auftretende Synergismus wurde durch Berechnen des Synergieindex (SI) zahlenmäßig dargestellt. Die Berechnung erfolgte nach der gängigen Methode von F.C. Kull et al., Applied Microbiology, Bd. 9 (1961), S. 538. Dort wird der SI nach der folgenden Formel berechnet:

$$\text{Synergieindex SI} = Q_a/Q_A + Q_b/Q_B$$

Bei der Anwendung dieser Formel auf das hier geprüfte Biozidsystem MIT + DIMTS haben die Größen in der Formel folgende Bedeutung:

$Q_a$ = Konzentration von MIT in der Mischung Diiodmethyl-p-toloylsulfon + MIT
$Q_A$ = Konzentration von MIT als alleinigem Biozid
$Q_b$ = Konzentration von Diiodmethyl-p-tolylsulfon im Biozidgemisch
$Q_B$ = Konzentration von Diiodmethyl-p-tolylsulfon als alleinigem Biozid

Wenn der Synergieindex einen Wert von über 1 aufweist, bedeutet dies, dass ein Antagonismus vorliegt.

Wenn der Synergieindex den Wert 1 annimmt, bedeutet dies, dass eine Addition der Wirkung der beiden Biozide gegeben ist. Wenn der Synergieindex einen Wert von unter 1 annimmt, bedeutet dies, dass ein Synergismus der beiden Biozide besteht.

Tabelle 1

Berechnung des Synergieindexes von Diiodmethyl-p-tolylsulfon (in der Tabelle DIMTS genannt) + MIT bezüglich *Pseudomonas aeruginosa* bei einer Inkubationszeit von 48 Stunden bei 30 °C.

| MHK Qa (MIT) [ppm] | MHK Qb (DIMTS) [ppm] | Total [ppm] ppm | Gew.-% MIT | Gew.% DIMTS | Qa/QA | Qb/QB | Synergie-index Index Qa/QA + Qb/QB |
|---|---|---|---|---|---|---|---|
| 40 | 0 | 40 | 100,0 | 0,0 | 1,00 | 0,00 | 1,00 |
| 30 | 100 | 130 | 23,1 | 76,9 | 0,75 | 0,08 | 0,83 |
| 25 | 200 | 225 | 11,1 | 88,9 | 0,63 | 0,16 | 0,79 |
| 20 | 400 | 420 | 4,8 | 95,2 | 0,50 | 0,32 | 0,82 |
| 15 | 500 | 515 | 2,9 | 97,1 | 0,38 | 0,40 | 0,78 |
| 10 | 700 | 710 | 1,4 | 98,6 | 0,25 | 0,56 | 0,81 |
| 5 | 800 | 805 | 0,6 | 99,4 | 0,13 | 0,64 | 0,77 |
| 0 | 1250 | 1250 | 0,0 | 100,0 | 0,00 | 1,00 | 1,00 |

Qa: Konzentration von MIT in der Mischung, die einen Endpunkt zeigt
QA: Konzentration von MIT als alleiniges Agens, das einen Endpunkt zeigt
Qb: Konzentration von DIMTS in der Mischung, die einen Endpunkt zeigt
QB: Konzentration von DIMTS als alleiniges Agens, das einen Endpunkt zeigt

Aus der Tabelle 1 ist ersichtlich, dass der optimale Synergismus, d.h. der niedrigste Synergieindex (0,77) einer Biozidzusammensetzung aus MIT und Diiodmethyl-p-tolylsulfon bei einem Verhältnis von 0,6 Gew.-% Diiodmethyl-p-tolylsulfon zu 99,4 Gew.-% MIT liegt.

Tabelle 2

| Berechnung des Synergieindexes von Diiodmethyl-p-tolylsulfon (in der Tabelle DIMTS genannt) + MIT bezüglich *Aspergillus Niger* bei einer Inkubationszeit von 72 Stunden bei 25°C. | | | | | | | |
|---|---|---|---|---|---|---|---|
| MHK Qa (MIT) [ppm] | MHK Qb (DIMTS) [ppm] | Total [ppm] | Gew.-% MIT | Gew.% DIMTS | Qa/QA | Qb/QB | Synergie-index Index Qa/QA + Qb/QB |
| 800 | 0 | 800 | 100,0 | 0,0 | 1,00 | 0,00 | 1,00 |
| 600 | 1 | 601 | 99,8 | 0,2 | 0,75 | 0,10 | 0,85 |
| 500 | 2 | 502 | 99,6 | 0,4 | 0,63 | 0,20 | 0,83 |
| 300 | 3 | 303 | 99,0 | 1,0 | 0,38 | 0,30 | 0,68 |
| 200 | 4 | 204 | 98,0 | 2,0 | 0,25 | 0,40 | 0,65 |
| 100 | 5 | 105 | 95,2 | 4,8 | 0,13 | 0,50 | 0,63 |
| 0 | 10 | 10 | 0,0 | 100,0 | 0,00 | 1,00 | 1,00 |
| Qa: Konzentration von MIT in der Mischung, die einen Endpunkt zeigt<br>QA: Konzentration von MIT als alleiniges Agens, das einen Endpunkt zeigt<br>Qb: Konzentration von DIMTS in der Mischung, die einen Endpunkt zeigt<br>QB: Konzentration von DIMTS als alleiniges Agens, das einen Endpunkt zeigt | | | | | | | |

Aus der Tabelle 2 ist ersichtlich, dass der optimale Synergismus, d.h. der niedrigste Synergieindex (0,63) einer Biozidzusammensetzung aus MIT und Diiodmethyl-p-tolylsulfon bei einem Verhältnis von 4,8 Gew.-% Diiodmethyl-p-tolylsulfon zu 95,2 Gew.-% MIT liegt.

Beispiel 2 Untersuchung der geruchsinhibitorischen Wirkung

Für die folgenden Versuche wurde eine Seidenmatt-Farbe der in Tabelle 1 angegebenen Zusammensetzung verwendet. Als Konservierungsmittel wurde 2-Methyl-4-isothiazolin-3-on verwendet (Kordek® MLX, 9,7 % MIT, Fa. Rohm & Haas).

Tabelle 1: Zusammensetzung der Farbe

| **Rohstoff** | **Bezeichnung** | **Hersteller/Lieferant** | **Menge (g)** | **%** |
|---|---|---|---|---|
| Wasser | - | - | 872 | 7,50 |
| Celluloseether | Hydroxyethylcellulose | Hercules | 12 | 0,25 |
| Dispergiermittel | Tamol 1124 | Rohm & Haas | 12 | 0,30 |
| Entschäumer | LB-8041/4 | HI-MAR Specialties | 10 | 0,25 |
| Ammoniumhydroxid | | Fisher Scientific | 2 | 0,10 |
| Calciumcarbonat | HuberCarb Q325 | Huber | 312 | 7,80 |
| Titandioxid | Tiona 596 | Millenium | 624 | 15,60 |
| Propylenglykol | | Fisher Scientific | 72 | 1,80 |
| Koaleszenzmittel | Texanol | Ashland Chemical | 60 | 1,50 |
| Acrylatdispersion | Rhoplex AC 264 | Rohm & Haas | 2024 | 50,60 |
| | | **Summe** | **4000** | **100,00** |

Die Farbe wird mit der in Tabelle 2 angegebenen Menge MIT versetzt und homogenisiert. Anschließend werden die zu untersuchenden Inhibitoren eingewogen. Eine Probe nur mit MIT als alleinigem Zusatz ohne Inhibitoren dient als Positivkontrolle. Als Referenzprobe dient eine Blank-Probe ohne MIT.

Die so hergestellten flüssigen Farbproben werden in drei Serien geteilt. Die Probenserie A wird direkt nach der Herstellung auf Glasträger appliziert und für 24 Stunden bei Raumtemperatur und 60% +/- 10% relativer Luftfeuchte

getrocknet, um einen Farbfilm zu erzeugen. Probenserie B wird 14 Tage bei 40°C im Nasszustand in einem geschlossenen Gefäß gelagert. Probenserie C wird 28 Tage bei 40°C im Nasszustand in einem geschlossenen Gefäß gelagert. Aus Probenserie B und Probenserie C wird nach abgeschlossener Lagerung analog zu Probenserie A ein Farbfilm erzeugt.

Die getrockneten Farbfilme werden vom Glasträger abgeschält und in eine Schale oder Uhrglas gegeben. Anschließend werden die getrockneten Beschichtungsmaterialien in einem Exsikkator, der an eine Wasserstrahlpumpe angeschlossen ist (Fa. Brand, Saugleistung ca. 500 l/h), mit Ozon behandelt. Dazu wird die in den Exsikkator nachströmende Luft über einen Ozongenerator geleitet (Ozongenerator COM-SD-30, Kapazität 30 mg Ozon/h, Fa. Anseros). Die Ozonisierung erfolgt bei Raumtemperatur mit einer relativen Luftfeuchte von 60% +/- 10% über einen Zeitraum von 1 Minute. Dann werden die Probengefäße entnommen und das Probenmaterial olfaktorisch auf typischen Geruch untersucht.

Hierbei wurde für die olfaktorische Bewertung ein Panel aus fünf Prüfern ausgesucht, welches die Intensität des Geruchs jeder einzelnen Probe bewertete. Die Prüfer waren mit dem typischen "Ghost Odor" Geruch vertraut und aufgrund ihrer Kenntnis in der Lage, diesen eindeutig zuzuordnen.

Die Intensität des Geruchs der einzelnen Proben wird von allen Mitgliedern des Panels untersucht, die ohne zu wissen, welche Proben "Test-" und welche Proben "Kontroll-Proben " waren, und welche Punktzahl die anderen Panelmitglieder vergeben haben, an jeder Probe riechen und ihnen eine Punktzahl zuordnen. Die Bewertungsskala für die Stärke/Intensität des Geruchs, wobei 0 für gar keinen Geruch und 3 für starken Geruch steht, ist nachfolgend dargestellt:

| Punktezahl | Geruchsgrad |
|---|---|
| 0 | kein Geruch |
| 1 | unbestimmter leichter Geruch |
| 2 | leichter, aber eindeutiger Geruch |
| 3 | stark |

Aus den von den Prüfern für jede Probe ausgezeichneten Punktezahlen wird ein Mittelwert gebildet. Um sicher zu gehen, dass die Auswahl der Gruppe zufrieden stellend ist, um den Test durchzuführen, sollte der gerundete Mittelwert der Proben ohne MIT einen Wert von 0 nicht übersteigen und der gerundete Mittelwert der Probenserien B und C mit MIT und ohne Inhibitor einen Wert von 2 nicht unterschreiten. Wurden diese Kriterien nicht erfüllt, wurde eine neue Gruppe zusammengestellt. Aus den Bewertungen der fünf Prüfer wurde der Mittelwert gebildet und auf eine Ganze Zahl gerundet. Die Ergebnisse sind in Tabelle 2 dargestellt.

Aus den in der Tabelle 2 dargestellten Ergebnissen geht eindeutig die Konzentrations- und Zeitabhängigkeit des Ghost Odors hervor.

Tabelle 2: Ergebnisse Geruchstest nach Ozonisierung des getrockneten Farbfilmes

| Ansatz | Inhibitor | Menge Inhibitor | Geruch Probenserie (A) | Geruch Probenserie (B) | Geruch Probenserie (C) |
|---|---|---|---|---|---|
| ohne MIT | ohne | - | 0 | 0 | 0 |
| + 125 ppm MIT | ohne | - | 0 | 0 | 1 |
| + 250 ppm MIT | ohne | - | 0 | 1 | 2 |
| + 500 ppm MIT | ohne | - | 1 | 3 | 3 |
| + 1000 ppm MIT | ohne | - | 1 | 3 | 3 |
| + 500 ppm MIT | Diiodmethyl-p-tolyl-sulfon | 10 ppm | 0 | 0 | 0 |

## Patentansprüche

1. Konserviertes Produkt enthaltend als mikrobizide Wirkkomponenten20 bis 100 ppm 2-Methylisothiazolin-3-on und 1 bis 50 ppm eines oder mehrerer Haloalkylsulfone gemäß der allgemeinen Strukturformel I,

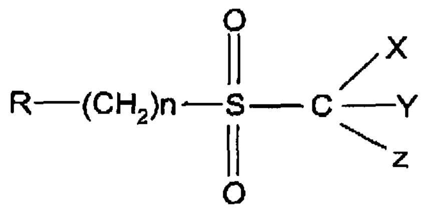

(I)

wobei

R ausgewählt ist aus der Gruppe H; Alkyl; Cycloalkyl, Aralkyl, Aryl, Alkoxyaryl und Heteroaryl, wobei die Gruppen Alkyl, Cycloalkyl, Aralkyl Aryl, Alkoxyaryl und Heteroaryl gegebenenfalls mit einem oder mehreren Substituenten substituiert sind,
X, Y und Z unabhängig voneinander ausgewählt sind aus der Gruppe bestehend aus Wasserstoff, Fluor, Chlor, Brom und Iod, wobei mindestens eines von X, Y und Z ein Halogenatom ist, und
n eine ganze Zahl von 0 bis 4 ist.

**2.** Konserviertes Produkt nach Anspruch I, wobei die Verbindung(en) gemäß der allgemeinen Strukturformel I ausgewählt ist bzw. sind aus der Gruppe 4-Tolyldiiodmethylsulfon, Phenyldiiodmethylsulfon, 4-Tolyldibrommethylsulfon, 4-Tolyltribrommethylsulfon, 4-(Methyl amido)-phenyl-diiodmethylsulfon, n-Heptyl-diiodmethylsulfon, 4-Aminophenyldiidmethylsulfon, 4-Chlorphenyldiiodmethylsulfon, 4-tert-Butyl-phenyldiiodmethylsulfon, 3-Tolyl-diiodmethylsulfon, 2-Tolyl-diiodmethylsulfon, 4-Bromphenyldiiodmethylsulfon, 2-Methyl-4-chlorphenyl-diiodmethylsulfon, α-Naphthyldiiodmethylsulfon, 2-Methyl-4-bromphenyldiiodmethylsulfon, 3-Methyl-4-bromphenylddiiodmethylsulfon, n-Butyl-diiodmethyl-sulfon, Benzyldiiodmethylsulfon, 2,4-Dimethylphenyldiiodmethylsulfon, 3,4-Dichlorphenyldiiodmethylsulfon, 4-Chlorphenyldibrommethylsulfon, 4-Methoxyphenyldibrommethylsulfon, Ethyldiiodmethylsulfon, tert-Butyl-diiodmethylsulfon, 4-Chlorphenyltribrommethylsulfon, 4-Methoxyphenyltribrommethylsulfon, Benzyliodomethylsulfon, Ethyldiiodmethylsulfon, 2-Methyl-4-tert-butylphenyldiiod-methylsulfon, 2-Nitro-4-methylphenyldibrommethylsulfon, 2-Nitro-4-methylphe-nyltribrommethylsulfon, 3-Tolyltribrommethylsulfon, 4-tert-Butylphenylbrommethylsulfon, 2-Nitro-4-methylphenyliodomethylsulfon, 4-Chlorbenzyldiiodmethylsulfon, 2-Nitro-4-chlorphenyliodomethylsulfon, 2-Nitro-4-chlorphcnyltri-brommethylsulfon, 4-Nitrophenyldiiodmethylsulfon, 2-Methyl-4-tert-butylphenyltribrommethylsulfon, 2-Nitro-4-chlorphenyldiiodmethylsulfon, 2-Isopropylphenylbrommethylsulfon, 2-Isopropylphenyldiiodmethylsulfon, 4-Nitrophenyl tribrommethylsulfon, 4-(2,2-Dimethylpropyl)phenyldiiodmethylsulfon, 4-chlorbenzoyldiiodmethylsulfon, Cyclohexyldiiodmethylsulfon, n-Pentyldiiodmethylsulfon, n-Hexyldiiodmethylsulfon, n-Propyldiiodmethylsulfon, n-Octyldiiodmethylsulfon, 4-Methylbenzyldiiodmethylsulfon, 4-Fluorbenzyldiiodmethylsulfon, 4-Brombenzyldiidmethylsulfon, 4-Methoxybenzyldiiodmethylsulfon, 3-Chlorbenzyldiiodmethylsulfon, 3,5-Dimethyldiiodmethylsulfon, 1-Phenyl-2-(diiodmethyl-sulfonyl)ethan, 3-Brombenzyldiiodmethylsulfon, 2-Naphthylmethyldiiodmethylsulfon, 1-Phenyl-3-(diiodmethylsulfonyl)propan, Isobutyldiiodmethylsulfon, 3,4-Dimethylbenzyldiiodmethylsulfon, 3,3-Dimethylpropyldiiodmethylsulfon, 2,2,4,4-Tetramethylbutyldiiodmethylsulfon, 4-Fluorobenzyldibrommethylsulfon, 3-Chlorbenzyldibrommethylsulfon, 4-Brombenzyldibrommethylsulfon, 3,4-Dichlorbenzyldibrommethylsulfon, 2,4-Dichlorbenzyldibrommethylsulfon, 3-Brombenzyldibrommethylsulfon, 2-Brombenzyldibrommethylsulfon, 2-Chlorobenzyldibrommethylsulfon, 4-Methylbenzyldibrommethylsulfon, 2-Methylbenzyldibrommethylsulfon, 3-Methylbenzyldibrommethylsulfon, 4-Nitrobenzyldibrommethylsulfon, 4-Methoxybenzyldibrommethylsulfon, 2,5-Dimethylbenzyldibrommethylsulfon, 3,4-Dimethylbenzyldibrommethylsulfon, 1-Phenyl-2-dibrommethylsulfonylethan, 1-Phenyl-3-(dibrommethylsulfonyl)-propan, Cyclohexyldibrommethylsulfon, n-Heptyldibrommethylsulfon, n-Decyldibrommethylsulfon, n-Hexadecyldibrommethylsulfon, 3-Methylpropyldiiodmethylsulfon und n-Decyldiiodmethylsulfon.

**3.** Konserviertes Produkt nach Anspruch 1, wobei die Verbindung gemäß der allgemeinen Formel I Diiodmethyl-p-tolylsulfon ist.

**4.** Konserviertes Produkt nach einem der Ansprüche 1 bis 3, wobei konservierten Produkte mit einem Gehalt an 5-Chlor-2-methylisothiazolin-3-on ausgenommen sind.

**5.** Konserviertes Produkt nach einem der Ansprüche 1 bis 4, **dadurch gekennzeichnet, dass** es ein oder mehrere weitere(s) Biozid(e) ausgewählt aus der Gruppe 2-Octyl-2H-isothiazolin-3-on, Benzisothiazolin-3-on, N-Methyl-Benzisothiazolin-3-on, N-Butyl-Benzisothiazolin-3-on, 2,2'-Dithiobis[N-methylbenzylamid], Formaldehyd, Tetramethy-

Iolacetylendiharnstoff (TMAD), Silber, Eisen-, Zink-, Kupfer- und Natriumpyrithion, 2-Brom-2-nitropropan-1,3-diol, 2,2-Dibrom-3-nitrilopropionsäureamid (DBNPA), 4,5-Dichlor-2-n-Octylisothiazolin-3-on (DCOIT) und 3-Iod-2-propinyl-N-butylcarbamat (IPBC) als mikrobizide Wirkkomponente(n) enthält.

**6.** Konserviertes Produkt nach einem der Ansprüche 1 bis 5, ausgewählt aus Ligninsulfonaten und Stärkepräparation in Anstrichmitteln, Farben, Lacken, Lasuren und Putzen, Emulsionen, Latices, Polymerdispersionen, Kreideaufschlämmungen, mineralischen Slurrys, keramischen Massen, Klebstoffen, Duftstoffen, caseinhaltigen Produkten, stärkehaltigen Produkten, Bitumenemulsionen, Tensidlösungen, Kraftstoffen, Reinigungsmitteln, Pigmentpasten und Pigmentdispersionen, Tinten, lithographischen Flüssigkeiten, Verdickern, kosmetischen Produkten, Toilettenartikeln, Wasserkreisläufen, Flüssigkeiten bei der Holzverarbeitung, Flüssigkeiten bei der Erdölgewinnung, Flüssigkeiten bei der Papierverarbeitung, Flüssigkeiten bei der Lederherstellung, Flüssigkeiten bei der Textilherstellung, Bohr-und Schneidölen, hydraulischen Flüssigkeiten und Kühlschmierstoffen.

**7.** Biozidzusammensetzung enthaltend als mikrobizide Wirkkomponenten 2-Methyl,-isothiazolin-3-on und Diiodmethyl-p-tolylsulfon, wobei Biozidzusammensetzungen mit einem Gehalt an 5-Chlor-2-methylisothiazolin-3-on ausgenommen sind.

**8.** Verwendung der Biozidzusammensetzung nach Anspruch 7 für die Gebindekonservierung.

## Claims

**1.** Preserved product comprising as active microbicidal components 20 to 100 ppm 2-methylisothiazolin-3-one and 1 to 50 ppm of one or more haloalkyl sulphones according to the general structural formula I,

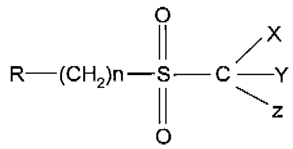

(I)

where

R is selected from the group H; alkyl; cycloalkyl, aralkyl, aryl, alkoxyaryl and heteroaryl, the groups alkyl; cycloalkyl, aralkyl, aryl, alkoxyaryl and heteroaryl being optionally substituted by one or more substituents,
X, Y and Z independently of one another are selected from the group consisting of hydrogen, fluorine, chlorine, bromine and iodine, at least one of X, Y and Z being a halogen atom, and
n is an integer from 0 to 4.

**2.** Preserved product according to Claim 1, the compound or compounds according to the general structural formula I being selected from the group consisting of 4-tolyl diiodomethyl sulphone, phenyl diiodomethyl sulphone, 4-tolyl dibromomethyl sulphone, 4-tolyl tribromomethyl sulphone, 4-(methylamido)phenyl diiodomethyl sulphone, n-heptyl diiodomethyl sulphone, 4-aminophenyl diiodomethyl sulphone, 4-chlorophenyl diiodomethyl sulphone, 4-tert-butylphenyl diiodomcthyl sulphone, 3-tolyl diiodomethyl sulphone, 2-tolyl-diiodomethyl sulphone, 4-bromophenyl diiodomethyl sulphone, 2-methyl-4-chlorophenyl diiodomethyl sulphone, α-naphthyl diiodomcthyl sulphone, 2-methyl 4-bromophenyl diiodomethyl sulphone, 3-methyl-4-bromophenyl diiodomethyl sulphone, n-butyl diiodomethyl sulphone, benzyl diiodomethyl sulphone, 2,4-dimethylphenyl diiodomethyl sulphone, 3,4-dichlorophenyl diiodomethyl sulphone, 4-chlorophenyl dibromomethyl sulphone, 4-methoxyphenyl dibromomethyl sulphone, ethyl diiodomethyl sulphone, tert-butyl diiodomethyl sulphone, 4-chlorophenyl tribromomethyl sulphone, 4-methoxyphenyl tribromomethyl sulphone, benzyl iodomethyl sulphone, ethyl diiodomethyl sulphone, 2-methyl-4-tert-butylphenyl diiodomethyl sulphone, 2-nitro-4-methylphenyl dibromomethyl sulphone, 2-nitro-4-methylphenyl tribromomethyl sulphone, 3-tolyl tribromomethyl sulphone, 4-tert-butylphenyl bromomethyl sulphone, 2-nitro-4-methylphenyl iodomethyl sulphone, 4-chlorobenzyl diiodomethyl sulphone, 2-nitro-4-chlorophenyl iodomethyl sulphone, 2-nitro-4-chlorophenyl tribromomethyl sulphone, 4-nitrophenyl diiodomethyl sulphone, 2-methyl 4-tert-butylphenyl tribromomethyl sulphone, 2-nitro-4-chlorophenyl diiodomethyl sulphone, 2-isopropylphenyl bromomethyl sulphone, 2-isopropylphenyl diiodomethyl sulphone, 4-nitrophenyl tribromomethyl sulphone, 4-(2,2-dimethylpropyl)phenyl diiodomethyl sulphone, 4-chlorobenzyl diiodomethyl sulphone, cyclohexyl diiodomethyl sulphone, n-pentyl diiodomethyl sulphone, n-hexyl diiodomethyl sulphone, n-propyl diiodomethyl sulphone, n-octyl diiodomethyl sulphone, 4-methylbenzyl diiodomethyl sulphone, 4-fluorobenzyl diiodomethyl sulphone, 4-bromobenzyl diiodomethyl sulphone, 4-methoxybenzyl diiodomethyl sulphone, 3-chlorobenzyl diiodomethyl sulphone, 3,5-dimethyl diiodomethyl sulphone, 1-phenyl-2-(diiodomethylsulphonyl)ethane, 3-bromobenzyl diiodomethyl sulphone, 2-naphthylmethyl diiodomethyl sulphone, 1-phenyl-3-(diiodomethylsulphonyl)propane, isobutyl diiodomethyl sulphone, 3,4-dimethylbenzyl diiodomethyl sulphone, 3,3-dimethylpropyl diiodomethyl sulphone, 2,2,4,4-tetramethylbutyl diiodomethyl sulphone, 4-fluorobenzyl dibromomethyl sulphone, 3-chlorobenzyl dibromomethyl sulphone, 4-bromobenzyl dibromomethyl sulphone, 3,4-dichlorobenzyl dibromomethyl sulphone, 2,4-dichlorobenzyl dibromomethyl sulphone, 3-bromobenzyl dibromomethyl sulphone, 2-bromobenzyl dibromomethyl sulphone, 2-chlorobenzyl dibromomethyl sulphone, 4-methylbenzyl dibromomethyl sulphone, 2-methylbenzyl dibromomethyl sulphone, 3-methylbenzyl dibromomethyl sulphone, 4-nitrobenzyl dibromomethyl sulphone, 4-methoxybenzyl dibromomethyl sulphone, 2,5-dimethylbenzyl dibromomethyl sulphone, 3,4-dimethylbenzyl dibromomethyl sulphone, 1-phenyl-2-dibromomethylsulphonylethane, 1-phenyl-3-(dibromomethylsulphonyl)propane, cyclohexyl dibromomethyl sulphone, n-heptyl dibromomethyl sulphone, n-decyl dibromomethyl sulphone, n-hexadecyl dibromomethyl sulphone, 3-methylpropyl diiodomethyl sulphone and n-decyl diiodomethyl sulphone.

3. Preserved product according to Claim 1, the compound according to the general formula I being diiodomethyl p-tolyl sulphone.

4. Preserved product according to any of Claims 1 to 3, with the exception of preserved products containing 5-chloro-2-methylisothiazolin-3-one.

5. Preserved product according to any of Claims 1 to 4, **characterized in that** it comprises one or more further biocides selected from the group consisting of 2-octyl-2H-isothiazolin-3-one, benzisothiazolin-3-one, N-methylbenzisothiazolin-3-one, N-butylbenzisothiazolin-3-one, 2,2'-dithiobis[N-methylbenzylamide], formaldehyde, tetramethylolacetylenediurea (TMAD), silver, iron-pyrithione, zinc-pyrithione, copper-pyrithione and sodium-pyrithione, 2-bromo-2-nitropropane-1,3-diol, 2,2-dibromo-3-nitrilopropionamide, (DBNPA), 4,5-dichloro-2-n-octylisothiazolin-3-one (DCOIT) and 3-iodo-2-propynyl N-butylcarbarrate (IPBC) as active microbicidal component(s).

6. Preserved product according to any of Claims 1 to 5, selected from lignosulphonates and starch preparation in coating materials, paints, varnishes, glazes and renders, emulsions, latices, polymer dispersions, chalk suspensions, mineral slurries, ceramic masses, adhesives, fragrances, casein products, starch products, bitumen emulsions, surfactant solutions, motor fuels, cleaning products, pigment pastes and pigment dispersions, liquid inks, lithographic fluids, thickeners, cosmetic products, toiletries, water circuits, liquids in wood processing, liquids in petroleum extraction, liquids in paper processing, liquids in leather production, liquids in textile production, drilling and cutting oils, hydraulic fluids and cooling lubricants.

7. Biocide composition comprising as active microbicidal components 2-methyl-isothiazolin-3-one and diiodomethyl p-tolyl sulphone, with the exception of biocide compositions containing 5-chloro-2-methylisothiazolin-3-one.

8. Use of the biocide composition according to Claim 7 for the in can preservation.

## Revendications

1. Produit conservé, contenant en tant que composant actif microbicide 20 à 100 ppm de 2-méthyl-isothiazolin-3-one et 1 à 50 ppm d'une ou plusieurs halogénoalkylsulfones selon la formule développée générale I,

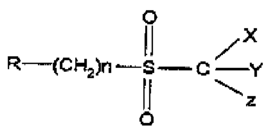

(I)

dans laquelle

R est choisi dans l'ensemble constitué par H ; des groupes alkyle, cycloalkyle, aralkyle, aryle, alcoxyaryle et

hétéroaryle, les groupes alkyle, cycloalkyle, aralkyle, aryle, alcoxyaryle et hétéroaryle étant éventuellement substitués par un ou plusieurs substituants,
X, Y et Z sont choisis, chacun indépendamment, dans l'ensemble constitué par les atomes d'hydrogène, de fluor, chlore, brome et d'iode, au moins l'un de X, Y et Z étant un atome d'halogène, et
n est un nombre entier valant de 0 à 4,

**2.** Produit conservé selon la revendication 1, dans lequel le(s) composé(s) selon la formule développée générale 1 est ou sont choisi(s) dans l'ensemble constitué par la 4-tolyldiiodométhylsulfone, la phényldiiodométhylsulfone, la 4-tolyldibromométhyl-sulfone, la 4-tolyltribromométhylsulfone, la 4-(méthylamido)-phényl-diiodométhylsulfone, la n-heptyl-diiodométhylsulfone, la 4-aminophényldiiodométhyl-sulfone, la 4-chlorophényldiiodométhylsulfone, la 4-tert-butyl-phényl-diiodométhylsulfone, la 3-tolyldiiodométhylsulfone, la 2-tolyldiiodométhylsulfone, la 4-bromophényldiiodométhylsulfone, la 2-méthyl-4-chlorophényldiiodométhylsulfone, l'$\alpha$-naphtyldiiodo-méthylsulfone, la 2-méthyl-4-bromophényldiiodométhylsulfone, la 3-méthyl-4-bromophényldiiodométhylsulfone, la n-butyl-diiodométhylsulfone, la benzyldiiodométhyl-sulfone, la 2,4-diméthylphényldiiodométhylsulfone, la 3,4-dichloxophényldiiodométhylsulfone, la 4-chloro-phényldibromométhylsulfone, la 4-méthoxyphényl-dibromométhylsulfone, l'éthyldiiodométhylsulfone, la tert-butyl-diiodométhylsulfone, la 4-chlorophényl-tribromométhylsulfone, la 4-methoxyphényltribromo-méthylsulfone, la benzyliodométhylsulfone, l'éthyl-diiodométhylsulfone, la 2-méthyl-4-tert-butylphényl-diiodométhylsulfone, la 2-nitro-4-méthylphényldibromo-méthylsulfone, la 2-nitro-4-méthylphényltribromo-méthylsulfone, la 3-tolyltribromométhylsulfone, la 4-tert-butylphénylbxomométhylsulfone, la 2-nitro-4-méthylphényliodométhylsulfone, la 4-chlorobenzyldiiodométhylsulfone, la 2-nitro-4-chlorophényliodométhyl-sulfone, la 2-nitro-4-chlorophényltribromométhyl-sulfone, la 4-nitrophényldiiodométhylsulfone, la 2-méthyl-4-tert-butylphényltribromométhylsulfone, la 2-nitro-4-chlorophényldiiodométhylsullone, la 2-isopropylphénylbromométhylsulfone, la 2-isopropyl-phényldiiodométhylsulfone, la 4-nitrophényltribromo-méthylsulfone, la 4-(2,2-diméthylpropyl)phényldiiodométhylsulfone, la 4-chlorobenzyldiiodométhylsulfone, la cyclohexyldiiodométhylsulfone, la n-pentyldiiodométhyl-sulfone, la n-hexyldiiodométhylsulfone, la n-propyl-diiodométhylsulfone, la n-octyldiiodométhylsulfone, la 4-méthylbenzyldiiodométhylsulfone, la 4-fluorobenzyl-diiodométhylsulfone, la 4-bromobenzyldiidométhyl-sulfone, la 4-méthoxybenzyldiiodométhylsulfone, la 3-chlorobenzyldiiodométhylsulfone, la 3,5-diméthyldiiodo-méthylsulfone, le 1-phényl-2-(diiodométhylsulfonyl)-éthane, la 3-bromobenzyldiiodométhylsulfone, la 2-naphtylméthyldiiodométhylsulfone, le 1-phényl-3-(diiodométhylsulfonyl)propane, l'isobutyldiiodométhyl-sulfone, la 3,4-diméthylbenzyldiiodométhylsulfone, la 3,3-diméthylpropyldiiodométhylsulfone, la 2,2,4,4-tétraméthylbutyldiiodométhylsulfone, la 4-fluorobenzyl-dibromométhylsulfone, la 3-chlorobenzyldibromométhylsulfone, la 4-bromobenzyldibromométhylsulfone, la 3,4-dichlorobenzyldibromométhylsulfone, la 2,4-dichloro-benzyldibromométhylsulfone, la 3-bromobenzyldibromométhylsulfone, la 2-bromobenzyldibromométhylsulfone, la 2-chlorobenzyldibromométhylsulfone, la 4-méthylbenzyldibromométhylsulfone, la 2-méthylbenzyldibromométhylsulfone, la 3-méthylbenzyldibromométhylsulfone, la 4-nitrobenzyldibromométhylsulfone, la 4-methoxybenzyl-dibromométhylsulfone, la 2,5-diméthylbenzyldibromo-méthylsulfone, la 3,4-diméthylbenzyldibromométhyl-sulfone, le 1-phényl-2-dibromométhylsulfonyléthane, le 1-phényl-3-(dibromométhylsulfonyl)-propane, la cyclohexyldibromométhylsulfone, la n-heptyldibromo-méthylsulfone, la n-décyldibromométhylsulfone, la n-hexadécyldibromométhylsulfone, la 3-méthylpropyl-diiodométhylsulfone et la n-décyldiiodométhylsulfone.

**3.** Produit conservé selon la revendication 1, dans lequel le composé selon la formule générale I est la diiodométhyl-p-tolylsulfone.

**4.** Produit conservé selon l'une quelconque des revendications 1 à 3, à l'exclusion des produits conservés ayant une teneur en 5-chloro-2-méthylisothiazolin-3-one.

**5.** Produit conservé selon l'une quelconque des revendications 1 à 4, **caractérisé en ce qu'**il contient comme composant(s) actif(s) microbicide(s) un ou plusieurs autre(s) biocide(s) choisi(s) dans le groupe constitué par la 2-octyl-2H-isothiazolin-3-one, la benzisothiazolin-3-one, la N-méthyl-benzisothiazolin-3-one, la N-butyl-benzisothiazolin-3-one, le 2,2'-dithiobis[N-méthylbenzylamide], le formaldéhyde, la tétraméthylolacétylènediurée (TMAD), argent, la pyrithione-fer, -zinc, -cuivre et -sodium, le 2-bromo-2-nitropropane-1,3-diol, le 2,2-dibromo-3-nitrilopropionamide (DBNPA), la 4,5-dichloro-2-n-octylisothiazolin-3-one (DCOIT) et le carbamate de 3-iodo-2-propynyl-N-butyle (IPBC).

**6.** Produit conservé selon l'une quelconque des revendications 1 à 5, choisi parmi les ligninesulfonates et une préparation d'amidon dans des enduits, peintures, vernis, lasures et crépis, des émulsions, latex, dispersions de polymères, suspensions de craie, suspensions minérales, matières céramiques, adhésifs, parfums, produits contenant de la caséine, produits contenant de l'amidon, émulsions de bitume, solutions de tensioactifs, carburants, produits de nettoyage, pâtes de pigments et dispersions de pigments, des encres, liquides lithographiques, épaississantes, produits cosmétiques, articles de toilette, circuits d'eau, liquides dans la transformation du bois, liquides dans l'extraction du pétrole, liquides dans le traitement du papier, liquides dans la fabrication du cuir, liquides dans la fabrication des textiles, huiles de forage et de coupe, fluides hydrauliques et lubrifiants réfrigérants.

**7.** Composition de biocide contenant en tant que composants actifs microbicides de la 2-méthyl-isothiazolin-3-one et de la diiodométhyl-p-tolylsulfone, à l'exclusion des compositions de biocides ayant une teneur en 5-chloro-2-méthylisothiazolin-3-one.

**8.** Utilisation de la composition de biocide selon la revendication 7, pour la conservation de fûts.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0676140 A
- EP 1005271 B
- EP 1030558 B
- US 4906651 A
- WO 0217716 A1
- US 3615745 B


### In der Beschreibung aufgeführte Nicht-Patentliteratur


- Directory of Microbicides for the Protection of Materials and Processes. Springer, 2006
- **F.C. Kull et al.** *Applied Microbiology,* 1961, vol. 9, 538